# EUROPEAN PATENT SPECIFICATION

(11) **EP 4 560 453 B1**
(45) Date of publication and mention of the grant of the patent: **22.04.2026**
(21) Application number: 24168082.6
(22) Date of filing: 02.04.2024
(51) Int. Cl.: G06F 3/06, G06F 12/02

(54) **A METHOD OF OPERATING A STORAGE SYSTEM**
VERFAHREN ZUM BETRIEB EINES SPEICHERSYSTEMS
PROCÉDÉ DE FONCTIONNEMENT D'UN SYSTÈME DE STOCKAGE

(30) Priority: 21.11.2023 KR 20230161835
(43) Date of publication of application: 28.05.2025
(73) Proprietor: Samsung Electronics Co., Ltd., Suwon-si, Gyeonggi-do 16677 (KR)
(72) Inventor: JO, Yejin, 16677 Suwon-si, Gyeonggi-do (KR); KIM, Kwangsuk, 16677 Suwon-si, Gyeonggi-do (KR); CHOI, Jinhwan, 16677 Suwon-si, Gyeonggi-do (KR); KANG, Wonho, 16677 Suwon-si, Gyeonggi-do (KR); KIM, Jungyoung, 16677 Suwon-si, Gyeonggi-do (KR); LEE, Jungtae, 16677 Suwon-si, Gyeonggi-do (KR)
(74) Representative: Kuhnen & Wacker Patent- und Rechtsanwaltsbüro PartG mbB

(56) References cited:
- KR-A- 20220 044 069
- US-A1- 2015 347 025
- US-A1- 2019 121 570
- US-A1- 2022 253 239
- US-A1- 2023 244 402
- US-B1- 9 229 854

## Description

### .BACKGROUND

One or more semiconductor memory devices may be used in data storage devices. Examples of such data storage devices include solid state drives (SSDs). These types of data storage devices may have various design and/or performance advantages over hard disk drives (HDDs), such as the absence of moving mechanical parts, higher data access speeds, stability, durability, and/or low power consumption. Various systems, e.g., a laptop computer, a car, an airplane, a drone, etc., have adopted storage devices including SSDs.

When a difference between valid data recognized by a host and real valid data in a storage device increases, performance of a storage system may be degraded.

US 2019/121570 A1 discloses a storage system including a host device and a storage device configured to perform a selective purge operation.

### SUMMARY

The invention is set out in the appended set of claims. This disclosure relates to semiconductor integrated circuits, and more particularly to a storage system and method of operating the same.

In general, in some aspects, the subject matter of this disclosure covers a method of operating a storage system, capable of matching valid data recognized by a host and real valid data in a storage device.

### BRIEF DESCRIPTION OF THE DRAWINGS

FIG. 1A is a flowchart illustrating an example of a method of operating a storage system.
FIG. 1B is a flowchart illustrating an example of a method of operating a storage system of FIG. 2 in detail.
FIG. 2 is a block diagram illustrating an example of a storage system.
FIG. 3 is a schematic of an example of a software hierarchical structure of the host and the storage device in FIG. 2.
FIG. 4A illustrates a difference between valid data blocks (e.g., valid blocks) recognized by the host and valid data blocks in the storage device in the storage system of FIG. 3.
FIG. 4B illustrates an example of a performance of the storage system when the storage system in FIG. 3 does not perform the method associated with FIGS. 1A and 1B.
FIG. 5 is a block diagram illustrating an example of the host in the storage system of FIG. 2.
FIG. 6 is a block diagram illustrating an example of the storage controller in the storage device in FIG. 1.
FIG. 7 illustrates an example of a flash translation layer (FTL) in the storage controller of FIG. 6 according to.
FIG. 8 is a block diagram illustrating an example of a connection relationship between the storage controller and one nonvolatile memory device in the storage device in FIG. 2.
FIG. 9 is a block diagram illustrating an example of the nonvolatile memory device in FIG. 8.
FIG. 10 is a block diagram illustrating an example of the memory cell array in the nonvolatile memory device of FIG. 9.
FIG. 11 is a circuit diagram illustrating one of the memory blocks of FIG. 10.
FIG. 12 illustrates an example of a structure of a cell string NS11 in the memory block of FIG. 11.
FIG. 13 is a diagram illustrating an example of a method of operating a storage system.
FIG. 14 is a diagram illustrating an example of a universal flash storage (UFS) protocol information unit (UPIU) used in a method of operating a storage system.
FIG. 15 illustrates an example of a format of the query request UPIU that is transferred from the host to the storage device.
FIG. 16 illustrates an example of query functions of the query request UPIU of FIG. 15.
FIG. 17 illustrates an example of transaction specific fields when the query request UPIU of FIG. 15 correspond to standard read/write request.
FIG. 18 illustrates an example of read attribute operation code in FIG. 17.
FIG. 19 illustrates an example of a UFS attribute of a read request.
FIG. 20 illustrates an example of a format of a query response UPIU that is transferred from the storage device to the host.
FIG. 21A illustrates an example of read attribute operation code when the query response UPIU of FIG. 20 corresponds to standard read request.
FIG. 21B illustrates an example of a UFS attribute of a read response.
FIG. 22A is a flowchart illustrating an example of a method of operating a storage system.
FIG. 22B is a flowchart illustrating an example of a method of operating a storage system.
FIG. 23 is an example of a sequence of a method of operating a storage system of FIG. 22B.
FIG. 24 illustrates an example of a header of response UPIU transmitted from the storage device to the host.
FIG. 25 illustrates an example of a format of device information field in the response UPIU of FIG. 24.
FIG. 26 illustrates an example of exception event control attribute included in the first query response transmitted from the storage device to the host.
FIG. 27 illustrates an example of exception event status attribute included in the first query response transmitted from the storage device to the host.
FIG. 28 illustrates a performance of the storage system when the storage system in FIG. 3 performs the method of operating a storage system.
FIG. 29 is a block diagram illustrating an example of a storage system.
FIG. 30 is a block diagram illustrating an example of a storage device.
FIG. 31 is a block diagram illustrating an example of an electronic system including a semiconductor device.

### DETAILED DESCRIPTION

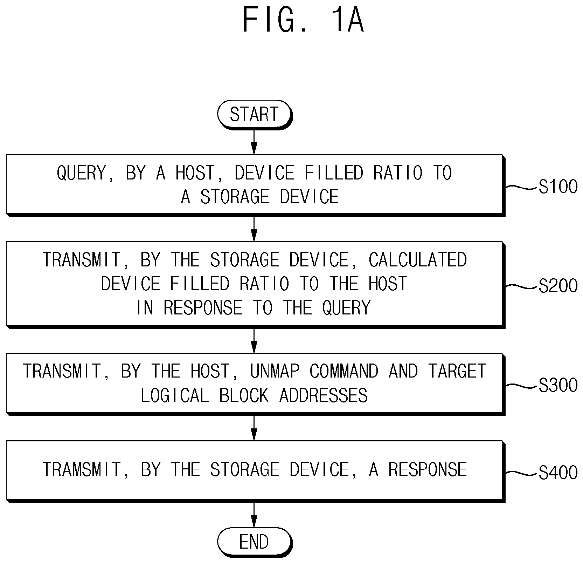

FIG. 1A is a flowchart illustrating an example of a method of operating a storage system.

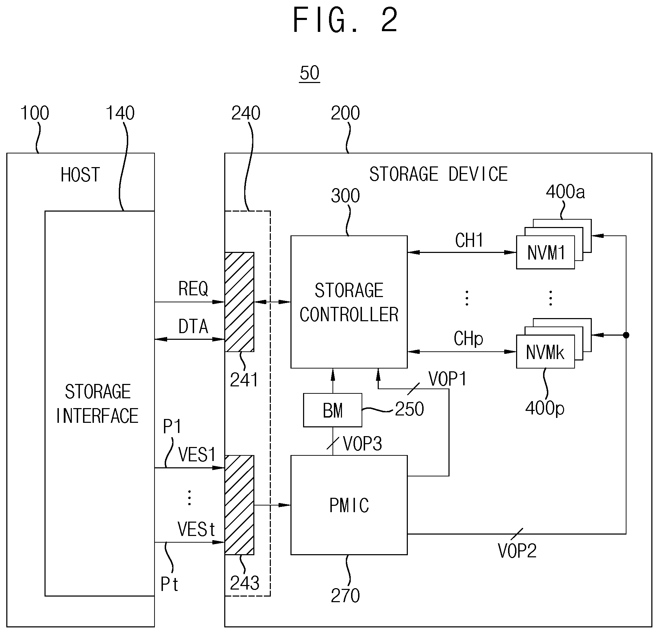

A method of operating a storage system of FIG. 1A will be described with further reference to a storage system 50 of FIG. 2.

Referring to FIGS. 1A and 2, in a method of operating the storage system 50 including a host 100 and a storage device 200, the host 100 queries the storage device 200 regarding a device-filled-ratio of a storage space of a plurality of nonvolatile memory devices 400a-400k in the storage device 200 (operation S100). The storage space may be referred to a data storage space of the plurality of nonvolatile memory devices 400a-400k and the device-filled-ratio is a ratio of the number of valid memory blocks storing valid data among a plurality memory blocks of the plurality of nonvolatile memory devices 400a-400p.

A storage controller 300, which controls the plurality of nonvolatile memory devices 400a-400k and is included in the storage device 200, transmits a calculated device-filled-ratio to the host 100 in response to the query (operation S200). The host 100 transmits an unmap command and target logical block addresses to the storage device 200 based on the calculated device-filled-ratio (operation S300).

The storage device 200 deallocates physical block addresses corresponding to the target logical block addresses in response to the unmap command (operation S400).

The host 100 and the storage device 200 may communicate with each other according to universal flash storage (UFS) standards version 3.1 published on January 30, 2020 by JEDEC.

In the conventional storage system, even when a difference between valid data recognized by the host 100 and real valid data in the storage device 200 occurs, the host 100 does not query a device-filled-ratio of a storage space to the storage device 200. When a device-filled-ratio recognized by the host 100 decreases under a threshold value, a file system in the host 100 issues a discard and the storage device 200 begins garbage collection in response to the discard. Because the file system holds the discards without directly exporting the discards to the storage device 200, when the discards reach a predetermined number, the file system transmits the discards to the storage device 200. As a result, a cost of the garbage collection cost increases. For example, when the data storage space of the storage device 200 is full, an emergency garbage collection needs to be performed, thereby deteriorating performance.

However, in the present storage system 50, because the host 100 may proactively issue a discard by checking the device-filled-ratio of the data storage space of the storage device 200, the cost increase of the garbage collection may be prevented and emergency garbage collections may be prevented.

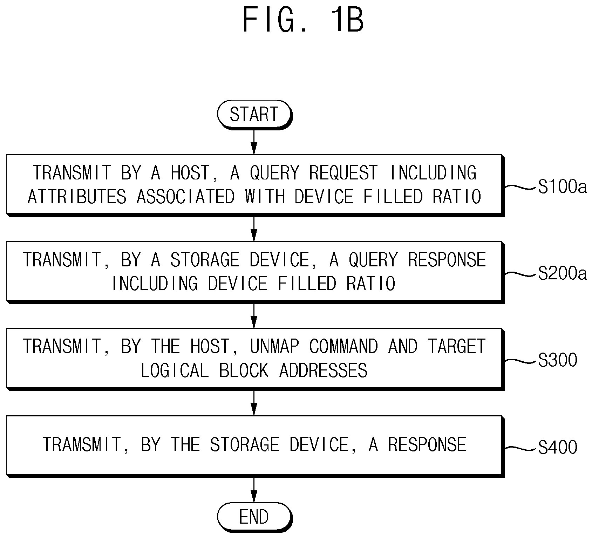

FIG. 1B is a flowchart illustrating a method of operating a storage system of FIG. 2 in detail. A method of operating a storage system of FIG. 1B will be described with further reference to the storage system 50 of FIG. 2.

Referring to FIGS. 1A, 1B, and 2, for querying the device-filled-ratio of a storage space of the plurality of nonvolatile memory devices 400a-400k to the storage device (operation S100), the host 100 transmits a query request including a UFS attribute associated with the device-filled-ratio of the storage space to the storage device 200 (operation S100a). For transmitting the calculated device-filled-ratio to the host 100(operation S200), the storage controller 300 transmits a query response including the calculated device-filled-ratio to the host 100 (operation S200a).

The query request may be transmitted from the host 100 to the storage device 200 and the query response may be transmitted from the storage device 200 to the host 100, using UFS protocol information units (UPIDs) according to the UFS standards.

The query request may correspond to a query request UPIU according to the UFS standards and the host 100 may set a query function of the query request UPIU to a standard read request and may define the UFS attribute associated with the device-filled-ratio of the storage space by using reserved identification numbers of the query request UPIU.

The query response may correspond to a query response UPIU and the storage controller 300 may transmit the calculated device-filled-ratio to the host 100 by using reserved identification numbers of the query response UPIU.

The storage controller 300 may calculate the device-filled-ratio based on counts of valid pages storing valid data, of the plurality of nonvolatile memory devices 400a-400k.

The host 100 transmits an unmap command and target logical block addresses to the storage device 200 based on the calculated device-filled-ratio (operation S300).

The storage device 200 deallocates physical block addresses corresponding to the target logical block addresses in response to the unmap command (operation S400).

FIG. 2 is a block diagram illustrating a storage system.

Referring to FIG. 2, the storage system 50 includes the host 100 and the storage device 200. The host 100 includes a storage interface 140. The storage device 200 may be any kind of storage device.

The storage device 200 may include a storage controller 300, a plurality of nonvolatile memory devices NVM1-NVMk 400a-400p (where p is an integer greater than two), a power management integrated circuit (PMIC) 270 and a host interface 240. The host interface 240 may include a signal connector 241 and a power connector 243. The storage device 200 may further include a buffer memory BM 250 that is implemented with a volatile memory device.

The plurality of nonvolatile memory devices 400a-400p may be used as a storage medium of the storage device 200. In some implementations, each of the plurality of nonvolatile memory devices 400a-400p may include a flash memory or a vertical NAND memory device. The storage controller 300 may be coupled to the plurality of nonvolatile memory devices 400a-400p through a plurality of connection channels CH1-CHp, respectively.

The storage controller 300 may be configured to receive a request REQ from the host 100 and communicate data DTA with the host 100 through the signal connector 241. The storage controller 300 may write data DTA to the plurality of nonvolatile memory devices 400a-400p or read the data DTA from plurality of nonvolatile memory devices 400a-400p based on the request REQ.

The storage controller 300 may communicate the data DTA with the host 100 using the buffer memory 250 as an input/output buffer. In some implementations, the buffer memory 250 may include a dynamic random access memory (DRAM).

The PMIC 270 may be configured to receive a plurality of power supply voltages (e.g., external supply voltages) VES1-VESt from the host 100 through the power connector 243. For example, the power connector 243 may include a plurality of power lines P1-Pt, and the adaptive power supply circuit 500 may be configured to receive the plurality of power supply voltages VES1-VESt from the host 100 through the plurality of power lines P-Pt, respectively. Here, t represents a positive integer greater than one.

The PMIC 270 may generate at least one first operating voltage VOP1 used by the storage controller 300, at least one second operating voltage VOP2 used by the plurality of nonvolatile memory devices 400a-400k, and at least one third operating voltage VOP3 used by the buffer memory 250 based on the plurality of power supply voltages VES1-VESt.

For example, when the PMIC 270 receives all of the plurality of power supply voltages VES1-VESt from the host 100, the PMIC 270 may generate the at least one first operating voltage VOP1, the at least one second operating voltage VOP2, and the at least one third operating voltage VOP3 using all of the plurality of power supply voltages VES1-VESt. On the other hand, when the PMIC 270 receives less than all of the plurality of power supply voltages VES1-VESt from the host 100, the PMIC 270 may generate the at least one first operating voltage VOP1, the at least one second operating voltage VOP2, and the at least one third operating voltage VOP3 using all of the part of the plurality of power supply voltages VES1-VESt that is received from the host 100.

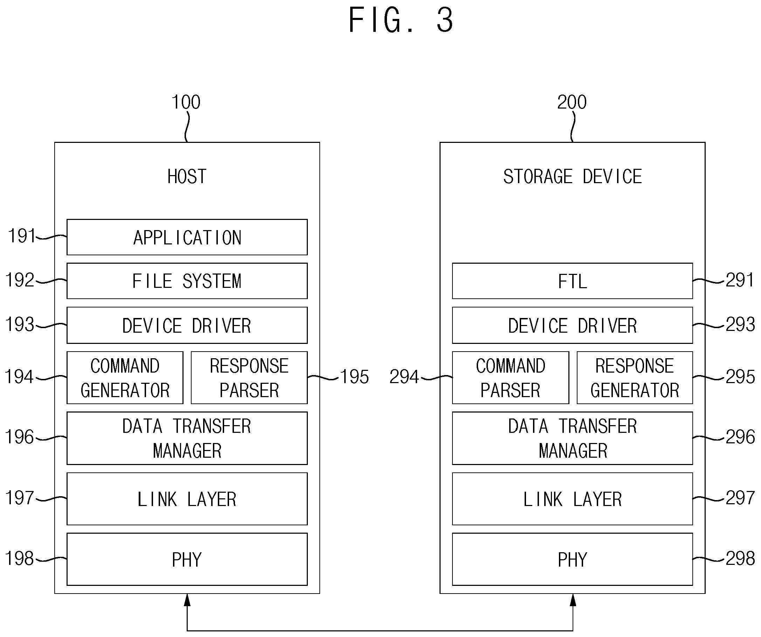

FIG. 3 is a schematic of an example of a software hierarchical structure of the host and the storage device in FIG. 2.

Referring to FIG. 3, the host 100 includes an application 191, a file system 192, a device driver 193, a command generator 194, a response parser 195, a data transfer manager 196, a link layer 1977, and a physical layer (PHY) 198.

The device driver 193 may control overall operations of the host 100 to control the storage device 200. The command generator 194 may generate commands to be transferred to the storage device 200. The response parser 195 may parse or decode responses received from the storage device 200. The data transfer manager 196 may generate packets of data to be transferred to the storage device 200. The link layer 197 may control data flow to the PHY 198 and perform recovery of data transfer errors. The PHY 198 may manage physical data communication with the storage device 200.

The application 191 may be an application software program that is executed on an operating system. For example, the application 191 has been programmed to aid in generating, copying and deleting a file. For example, the application 191 may provide various services such as a video application, a game application, a web browser application, etc.

The file system 192 may manage files used by the host 100. For example, the file system 192 may manage file names, extensions, file attributes, file sizes, cluster information, etc. of files accessed by requests from the host 100 or applications executed by the host 100. The file system 192 may generate, delete, and manage data on a file basis. For example, the file system 192 may be a flash-friendly file system (F2FS).

The application 191 and the file system 192 may be referred to as a high level, and the data transfer manager 196, the link layer 197 and the PHY 198 may be referred to as a low level.

The storage device 200 may include a flash translation layer (FTL) 291, a device driver 293, a command parser 294, a response generator 295, a data transfer manager 296, a link layer 297, and a PHY 298.

The device driver 252 may control overall operations of the storage device 200. The response generator 295 may generate responses to be transferred to the host 100. The command parser 294 may parse or decode commands received from the host 100. The data transfer manager 296 may generate packets of data to be transferred to the host 100. The link layer 297 may control data flow to the PHY 298 and perform recovery of data transfer errors. The PHY 298 may manage physical data communication with the host 100.

The FTL 291 may perform various functions, such as an address mapping operation, a wear-leveling operation, a garbage collection operation, or the like. The address mapping operation may be an operation of converting a logical address received from the host 100 into a physical address used to actually store data in plurality of nonvolatile memory devices 400a-400p. The wear-leveling operation may be a technique for preventing excessive deterioration of a specific memory block by allowing blocks of the plurality of nonvolatile memory devices 400a-400p to be uniformly used. As an example, the wear-leveling operation may be implemented using a firmware technique that balances erase counts of physical memory blocks. The garbage collection operation may be a technique for ensuring usable capacity in plurality of nonvolatile memory devices 400a-400p by erasing an existing memory block after copying valid data of the existing memory block to a new memory block.

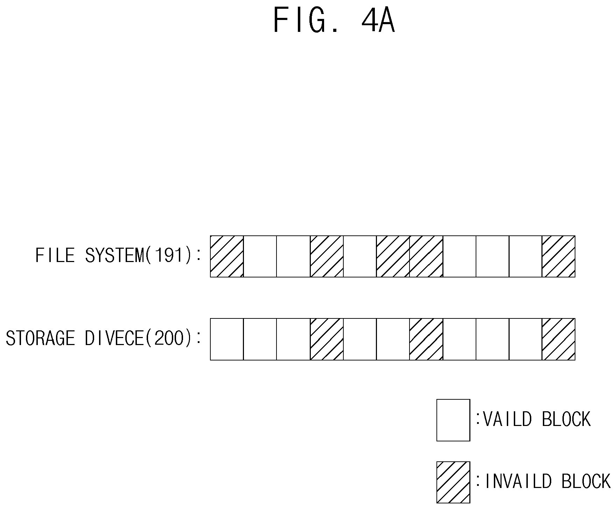

FIG. 4A illustrates a difference between valid data blocks (e.g., valid blocks) recognized by the host and valid data blocks in the storage device in the storage system of FIG. 3.

When a user requests the host 100 to delete data, the file system 192 in FIG. 3 invalidates the data requested to delete and does not issue an unmap (e.g., a discard) command to the storage device 200, so that there may be a difference between the valid data blocks recognized by the file system 192 and actual valid data blocks in the storage device 200 at a specific time point.

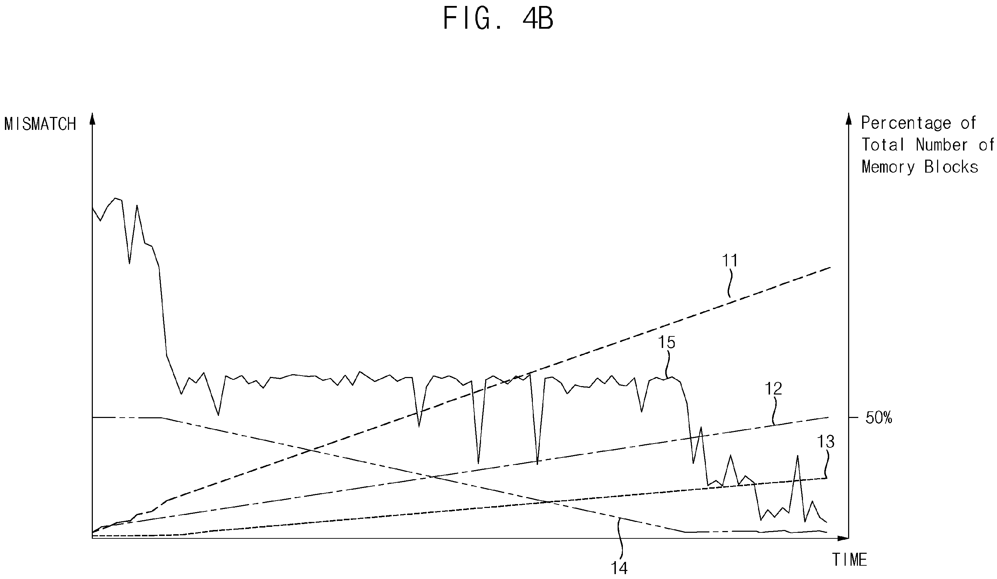

FIG. 4B illustrates a performance of the storage system when the storage system in FIG. 3 does not perform the method associated with FIGS. 1A and 1B.

In FIG. 4B, a dotted line represents a device-filled-ratio 11 indicating a ratio of valid memory blocks storing valid data among memory blocks of the plurality of nonvolatile memory devices 400a-400p of the storage device 200, another dotted line represents a device-filled-ratio 12 of the plurality of nonvolatile memory devices 400a-400p recognized by the host 100. The slopes of the dotted lines representing the device-filled-ratio 11 and 12 equal the value of the ratios. Another dotted line represents dirty segments 13 that are invalid in the host 100 but is valid in the storage device 200, another dotted line represents free blocks 14 in which data is not stored in the storage device 200, and a solid line represents a performance 15 of the storage system 50, e.g., the amount of mismatch between valid data and real valid data over time.

Referring to FIG. 4B, the performance of the storage system is greatly degraded when a difference between the device-filled-ratio 12 recognized by the host 100 and actual device-filled-ratio 11 of the storage device 200 increases and the device-filled-ratio 12 recognized by the host 100 comes to 50%.

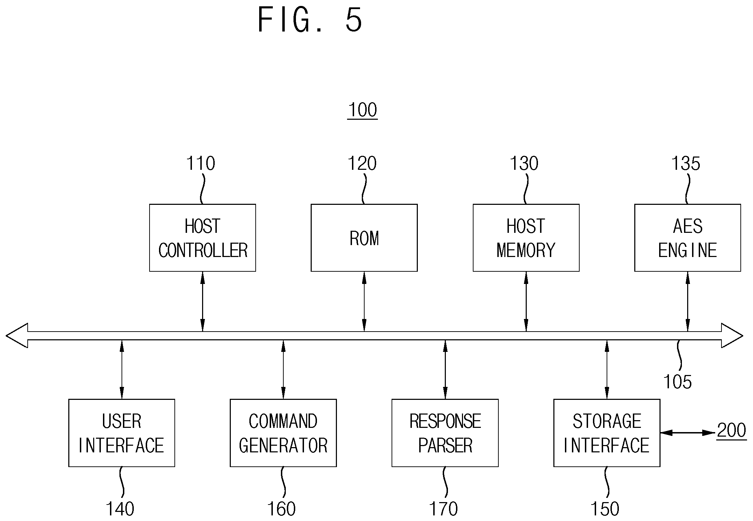

FIG. 5 is a block diagram illustrating an example of the host in the storage system of FIG. 2.

Referring to FIG. 5, the host 100 includes a host controller 110, a read-only memory (ROM) 120, a host memory 130, an advanced encryption standard (AES) engine 135, the storage interface 140, a user interface 150, a command generator 160, and a response parser 170 which are connected to each other through a bus 105. The command generator 160 may correspond to the command generator 194 in FIG. 3 and the response parser 170 may correspond to the response parser 195 in FIG. 3.

The bus 105 may refer to a transmission channel via in which data is transmitted between the host controller 110, the ROM 120, the host memory 130, the AES engine 135, the storage interface 140, the user interface 150, the command generator 160 and the response parser 170 of the host 100.

The ROM 120 may store various application programs. For example, application programs supporting storage protocols such as Advanced Technology Attachment (ATA), Small Computer System Interface (SCSI), embedded Multi Media Card (eMMC), and/or Universal flash storage (UFS) protocols are stored.

The host memory 130 may temporarily store data or programs. The user interface 150 may be a physical or virtual medium for exchanging information between a user and the host 100, a computer program, etc., and includes physical hardware and logical software. For example, the user interface 150 may include an input device for allowing the user to manipulate the host 100 and an output device for outputting a result of processing an input of the user.

The host controller 110 may control overall operations of the host 100. The host controller 110 may generate a command for storing data in the storage device 200 or a request (or a command) for reading data from the storage device 200 by using an application stored in the ROM 120 and may transmit the request to the storage device 200 via the storage interface 140. The host controller 110 may generate a plurality of power supply voltages VES1-VESt.

The AES engine 135 may perform an encryption operation on data provided from the storage device 200 and may perform a decryption operation on data received from the storage device 200.

The command generator 160 may generate a command designating an operation to be performed in the storage device 200. The command, generated by the command generator 160, may be transmitted to the storage device 200 through the storage interface 270.

The command generator 160 may generate various kinds of commands such as a read command, a write command and an erase command. The read command may designate an operation of reading data stored in the storage device 200. The write command may designate an operation of writing data in the storage device 200. The erase command may designate an operation of physically erasing data stored in the storage device 200.

The response parser 170 may analyze a response transmitted from the storage device 200.

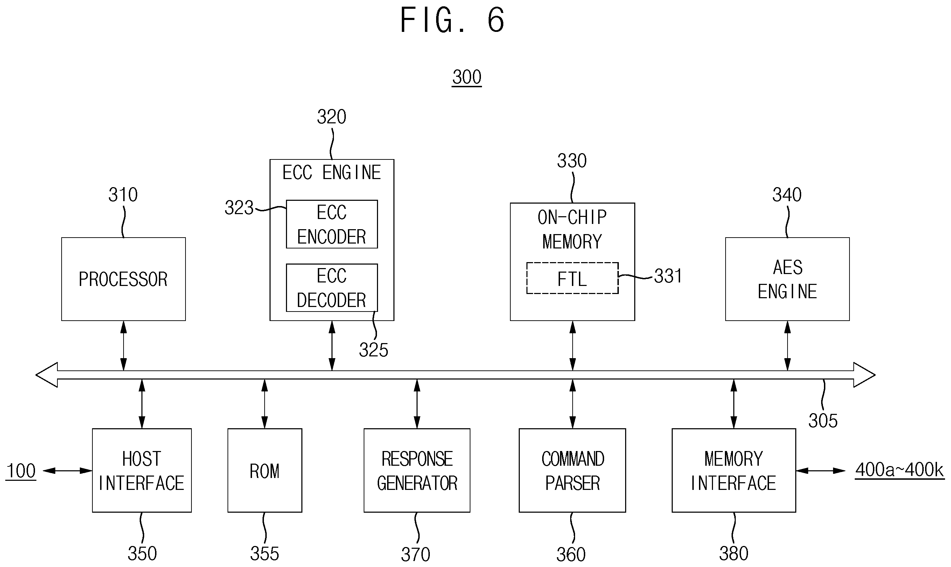

FIG. 6 is a block diagram illustrating an example of the storage controller in the storage device in FIG. 1.

Referring to FIG. 6, the storage controller 300 includes a processor 310, an error correction code (ECC) engine 320, an on-chip memory 330, an AES engine 340, a host interface 350, a ROM 355, a response generator 370, a command parser 360, and a memory interface 380 which are connected via a bus 305. The response generator 370 may correspond to the response generator 295 in FIG. 3 and the command parser 360 may correspond to the command parser 294 in FIG. 3.

The processor 310 may control an overall operation of the storage controller 300. The processor 310 may control the ECC engine 320, the on-chip memory 330, the AES engine 340, the host interface 350, the ROM 355, the response generator 370, the command parser 360 and the memory interface 380. The processor 310 may include one or more cores (e.g., a homogeneous multi-core or a heterogeneous multi-core). The processor 310 may be or include, for example, at least one of a central processing unit (CPU), an image signal processing unit(ISP), a digital signal processing unit (DSP), a graphics processing unit (GPU), a vision processing unit (VPU), and a neural processing unit (NPU). The processor 310 may execute various application programs (e.g., a flash translation layer (FTL) 333 and firmware) loaded onto the on-chip memory 330.

The on-chip memory 330 may store various application programs that are executable by the processor 310. The on-chip memory 330 may operate as a cache memory adjacent to the processor 310. The on-chip memory 330 may store a command, an address, and data to be processed by the processor 310 or may store a processing result of the processor 310. The on-chip memory 330 may be, for example, a storage medium or a working memory including a latch, a register, a static random access memory (SRAM), a dynamic random access memory (DRAM), a thyristor random access memory (TRAM), a tightly coupled memory (TCM), etc.

The processor 310 may execute the FTL 331 loaded onto the on-chip memory 330. The FTL 331 may be loaded onto the on-chip memory 330 as firmware or a program stored in the one of the nonvolatile memory devices 400a-400p. The FTL 331 may manage mapping between a logical address provided from the host 100 and a physical address of the nonvolatile memory devices 400a-400p and may include an address mapping table manager managing and updating an address mapping table. The FTL 331 may further perform a garbage collection operation, a wear leveling operation, and the like, as well as the address mapping described above. The FTL 331 may be executed by the processor 310 for addressing one or more of the following aspects of the nonvolatile memory devices 400a-400p: overwrite- or in-place write-impossible, a life time of a memory cell, a limited number of program-erase (PE) cycles, and an erase speed slower than a write speed.

Memory cells of the nonvolatile memory devices 400a-400p may have the physical characteristic that a threshold voltage distribution varies due to causes, such as a program elapsed time, a temperature, program disturbance, read disturbance, and so on. For example, data stored at the nonvolatile memory devices 400a-400p becomes erroneous due to the above causes.

The storage controller 300 may utilize a variety of error correction techniques to correct such errors. For example, the storage controller 300 may include the ECC engine 320. The ECC engine 320 may correct errors that occur in the data stored in the nonvolatile memory devices 400a-400k. The ECC engine 320 may include an ECC encoder 323 and an ECC decoder 325. The ECC encoder 323 may perform an ECC encoding operation on data to be stored in the nonvolatile memory devices 400a-400p. The ECC decoder 325 may perform an ECC decoding operation on data read from the nonvolatile memory devices 400a-400p.

The ROM 355 may store a variety of information, needed for the storage controller 300 to operate, in firmware.

The AES engine 340 may perform at least one of an encryption operation and a decryption operation on data input to the storage controller 300 by using a symmetric-key algorithm. Although not illustrated in detail, the AES engine 340 may include an encryption module and a decryption module. For example, the encryption module and the decryption module may be implemented as separate modules. For another example, one module capable of performing both encryption and decryption operations may be implemented in the AES engine 340.

The command parser 360 may analyze a command received from the host 100 and may provide the analyzed command to the processor 310.

The response generator 370 may generate a response in response to the command received from the host 100 and may transmit the response to the host 100 through the host interface 350.

The storage controller 300 may communicate with the host 100 through the host interface 350. For example, the host interface 350 may include Universal Serial Bus (USB), Multimedia Card (MMC), embedded-MMC, peripheral component interconnection (PCI), PCI-express, Advanced Technology Attachment (ATA), Serial-ATA, Parallel-ATA, small computer small interface (SCSI), enhanced small disk interface (ESDI), Integrated Drive Electronics (IDE), Mobile Industry Processor Interface (MIPI), Nonvolatile memory express (NVMe), Universal Flash Storage (UFS), and etc. The storage controller 300 may communicate with the nonvolatile memory devices 400a-400p through the memory interface 380.

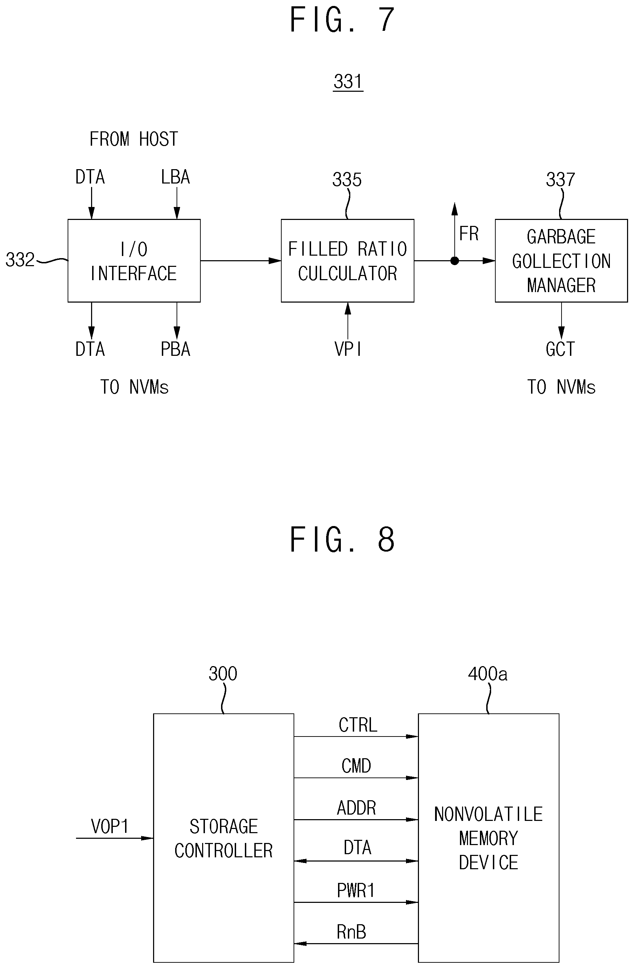

FIG. 7 illustrates an example of a FTL in the storage controller of FIG. 6.

Referring to FIG. 7, the FTL 331 includes an input/output (I/O) interface 332, a filled ratio calculator 335, and a garbage collection manager 337.

The I/O interface 332 may receive data DTA that is to be written and the logical address LBA of the DTA in response to a write request of the host 100 and may provide the nonvolatile memory devices 400a-400p with the physical address PBA corresponding to the logical address LBA on the basis of a mapping table stored in the on-chip memory 330.

At least one of the nonvolatile memory devices 400a-400p may perform a write operation of writing the DTA in a storage region based on the physical address PBA received from the I/O interface 332.

The filled ratio calculator 335 may receive valid page information VPI associated with valid page counts and may calculate a filled ratio FR based on the valid page information VPI. In some implementations, the filled ratio FR denotes a ratio of valid pages storing data with respect to available pages of the nonvolatile memory devices 400a-400p. The filled ratio calculator 335 may provide the filled ratio FR to the host 100 and the garbage collection manager 337.

The garbage collection manager 337 may generate a garbage collection trigger signal GCT and may provide the garbage collection trigger signal GCT to at least one of the nonvolatile memory devices 400a-400p such that the at least one of the nonvolatile memory devices 400a-400p performs a garage collection to copy data, stored in a valid page of a source block for garbage collection among a plurality of memory blocks of each of the nonvolatile memory devices 400a-400p, to a free page of a destination block and to erase the source block.

FIG. 8 is a block diagram illustrating an example of a connection relationship between the storage controller and one nonvolatile memory device in the storage device in FIG. 2.

Referring to FIG. 8, the storage controller 300 operates based on the first operating voltage VOP1, e.g., as a power supply voltage.

The nonvolatile memory device 400a may perform an erase operation, a program operation, and/or a write operation under control of the storage controller 300. The nonvolatile memory device 400a may receive a command CMD, an address ADDR, and (user) data DTA through input/output lines from the storage controller 300 for performing such operations. In addition, the nonvolatile memory device 400a may receive a control signal CTRL through a control line and receives a power PWR1 through a power line from the storage controller 300. In addition, the nonvolatile memory device 400a may provide the storage controller 300 with the data DTA and a status signal RnB.

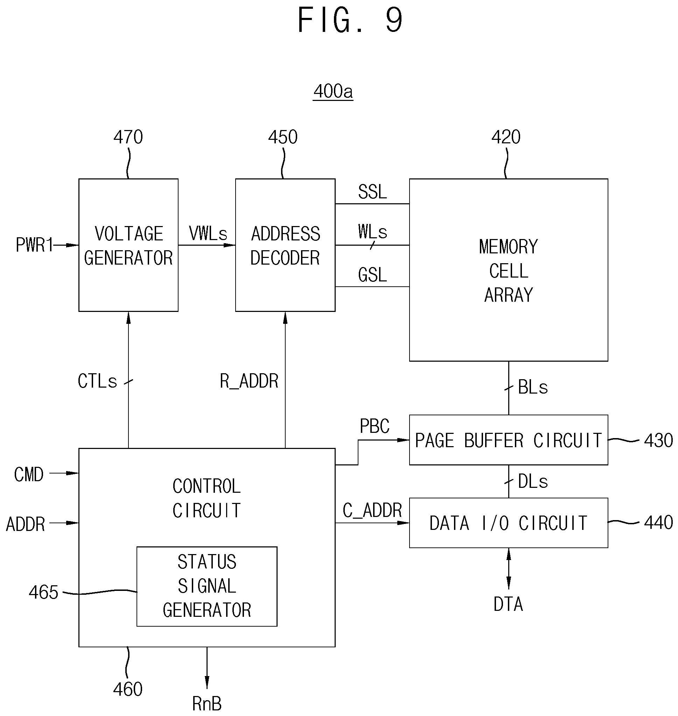

FIG. 9 is a block diagram illustrating an example of the nonvolatile memory device in FIG. 8.

Referring to FIG. 9, the nonvolatile memory device 400a includes a memory cell array 420, an address decoder 450, a page buffer circuit 430, a data input/output (I/O) circuit 440, a control circuit 460, and a voltage generator 470.

The memory cell array 420 may be coupled to the address decoder 450 through a string selection line SSL, a plurality of word-lines WLs, and a ground selection line GSL. In addition, the memory cell array 420 may be coupled to the page buffer circuit 430 through a plurality of bit-lines BLs.

The memory cell array 420 may include a plurality of memory cells coupled to the plurality of word-lines WLs and the plurality of bit-lines BLs.

In some implementations, the memory cell array 420 may be or include a three-dimensional memory cell array, which is formed on a substrate in a three-dimensional structure (e.g., a vertical structure). In this case, the memory cell array 420 may include vertical cell strings that are vertically oriented such that at least one memory cell is located over another memory cell.

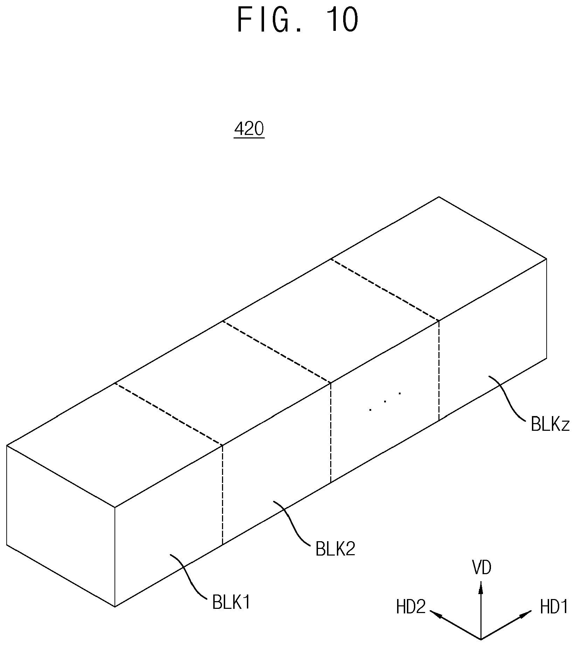

FIG. 10 is a block diagram illustrating an example of the memory cell array in the nonvolatile memory device of FIG. 9.

Referring to FIG. 8, the memory cell array 420 includes a plurality of memory blocks BLK1, BLK2 to BLKz of FIG. 10. The memory blocks BLK1, BLK2 to BLKz extend along a first horizontal direction HD1, a second horizontal direction HD2 and a vertical direction VD. Here, z is a natural number greater than two. In some implementations, the memory blocks BLK1, BLK2 to BLKz are selected by the address decoder 450 in FIG. 9. For example, the address decoder 450 may select a memory block BLK corresponding to a block address among the memory blocks BLK1, BLK2 to BLKz.

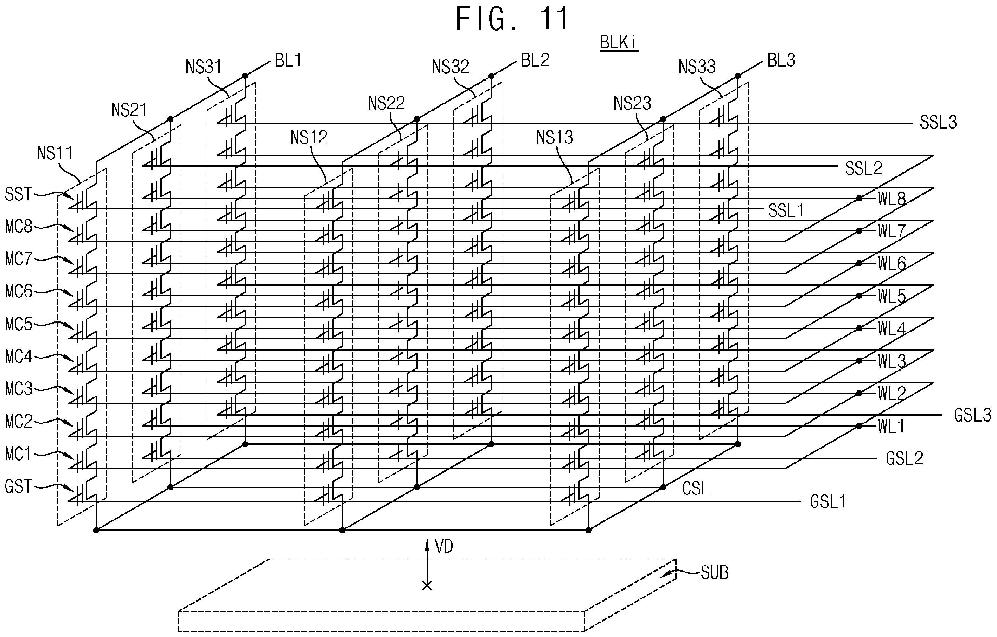

FIG. 11 is a circuit diagram illustrating an example of one of the memory blocks of FIG. 10.

The memory block BLKi of FIG. 10 may be formed on a substrate SUB in a three-dimensional structure (or a vertical structure). For example, a plurality of memory cell strings included in the memory block BLKi may be formed in a vertical direction VD perpendicular to the substrate SUB.

Referring to FIG. 11, the memory block BLKi includes a plurality of cell strings NS11, NS21, NS31, NS12, NS22, NS32, NS13, NS23 and NS33 (herein, represented as NS11 to NS33) coupled between bit-lines BL1, BL2 and BL3 and a common source line CSL. Each of the memory cell strings NS11 to NS33 includes a string selection transistor SST, a plurality of memory cells MC1, MC2, MC3, MC4, MC5, MC6, MC7 and MC8 (herein, represented as MC1 to MC8), and a ground selection transistor GST. In FIG. 9, each of the memory cell strings NS11 to NS33 is illustrated to include eight memory cells MC1 to MC8. However, the present disclosure is not limited thereto. In some implementations, each of the memory cell strings NS11 to NS33 may include any number of memory cells.

The string selection transistor SST may be connected to corresponding string selection lines SSL1 to SSL3. The plurality of memory cells MC1 to MC8 may be connected to corresponding word-lines WL1 to WL8, respectively. The ground selection transistor GST may be connected to corresponding ground selection lines GSL1 to GSL3. The string selection transistor SST may be connected to corresponding bit-lines BL1, BL2, and BL3, and the ground selection transistor GST may be connected to the common source line CSL.

Word-lines (e.g., WL1) having the same height in the vertical direction VD may be commonly connected, and the ground selection lines GSL1 to GSL3 and the string selection lines SSL1 to SSL3 may be separated. In FIG. 9, the memory block BLKi is illustrated to be coupled to eight word-lines WL1 to WL8 and three bit-lines BL1 to BL3. However, the present disclosure is not limited thereto. In some implementations, the memory cell array 420 may be coupled to any number of word-lines and bit-lines.

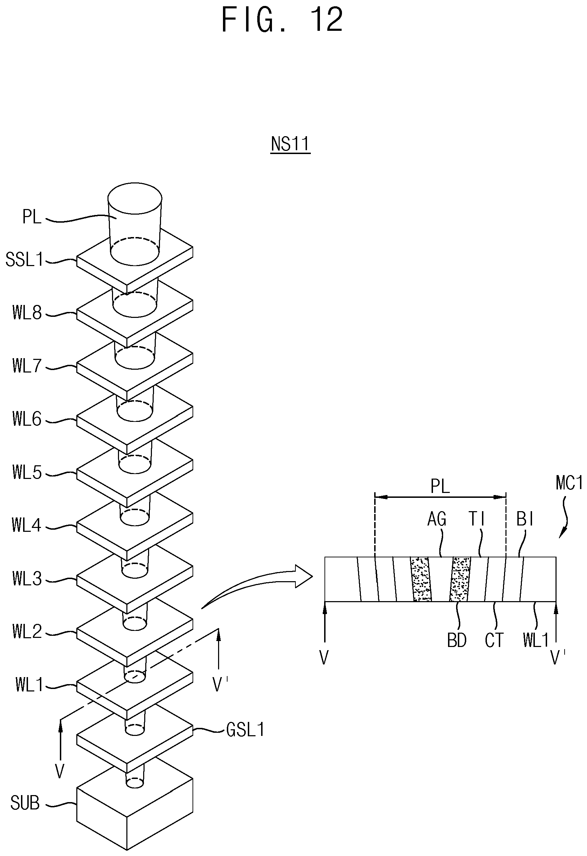

FIG. 12 illustrates an example of a structure of a cell string NS11 in the memory block of FIG. 11.

Referring to FIGS. 11 and 12, a pillar PL is provided on the substrate SUB such that the pillar PL extends in a direction perpendicular to the substrate SUB to make contact with the substrate SUB. Each of the ground selection line GSL, the word lines WL1 to WL8, and the string selection lines SSL1 illustrated in FIG. 10 may be formed of a conductive material parallel with the substrate SUB, for example, a metallic material. The pillar PL may be in contact with the substrate SUB through the conductive materials forming the string selection lines SSL1, the word lines WL1 to WL8, and the ground selection line GSL1.

A sectional view taken along a line V-V' is also illustrated in FIG. 12. A sectional view of a first memory cell MC1 corresponding to a first word line WL1 is illustrated. The pillar PL may include a cylindrical body BD. An air gap AG may be defined in the interior of the body BD.

The body BD may include P-type silicon and may be an area where a channel will be formed. The pillar PL may further include a cylindrical tunnel insulating layer TI surrounding the body BD and a cylindrical charge trap layer CT surrounding the tunnel insulating layer TI. A blocking insulating layer BI may be provided between the first word line WL and the pillar PL. The body BD, the tunnel insulating layer TI, the charge trap layer CT, the blocking insulating layer BI, and the first word line WL may constitute or be included in a charge trap type transistor that is formed in a direction perpendicular to the substrate SUB or to an upper surface of the substrate SUB. A string selection transistor SST, a ground selection transistor GST, and other memory cells may have the same structure as the first memory cell MC1.

Referring back to FIG. 9, the control circuit 460 may receive the command (signal) CMD and the address (signal) ADDR from the storage controller 300. The control circuit 460 may control an erase loop, a program loop and/or a read operation of the nonvolatile memory device 400a based on the command signal CMD and the address signal ADDR. The program loop may include a program operation and a program verification operation. The erase loop may include an erase operation and an erase verification operation.

For example, the control circuit 460 may generate control signals CTLs, which are used for controlling the voltage generator 470, may generate a page buffer control signal PBC for controlling the page buffer circuit 430 based on the command signal CMD, may provide the control signals CTLs to the voltage generator 470, and may provide the page buffer control signal PBC to the page buffer circuit 430. In addition, the control circuit 460 may generate a row address R_ADDR and a column address C_ADDR based on the address signal ADDR. The control circuit 460 may provide the row address R_ADDR to the address decoder 450 and may provide the column address C_ADDR to the data I/O circuit 440.

The address decoder 450 may be coupled to the memory cell array 420 through the string selection line SSL, the plurality of word-lines WLs, and the ground selection line GSL. During the program operation or the read operation, the address decoder 450 may determine one of the plurality of word-lines WLs as a first word-line (e.g., a selected word-line) and determine rest of the plurality of word-lines WLs except for the first word-line as unselected word-lines based on the row address R_ADDR.

The voltage generator 470 may generate word-line voltages VWLs, which are required for the operation of the nonvolatile memory device 400a, based on the control signals CTLs. The voltage generator 470 may receive the power PWR1 from the storage controller 300. The word-line voltages VWLs may be applied to the plurality of word-lines WLs through the address decoder 450.

For example, during the erase operation, the voltage generator 470 may apply an erase voltage to a well of the memory block and may apply a ground voltage to entire word-lines of the memory block. During the erase verification operation, the voltage generator 470 may apply an erase verification voltage to the entire word-lines of the memory block or sequentially apply the erase verification voltage to word-lines in a word-line basis.

For example, during the program operation, the voltage generator 470 may apply a program voltage to the first word-line and may apply a program pass voltage to the unselected word-lines. In addition, during the program verification operation, the voltage generator 470 may apply a program verification voltage to the first word-line and may apply a verification pass voltage to the unselected word-lines.

Furthermore, during the read operation, the voltage generator 470 may apply a read voltage to the first word-line and may apply a read pass voltage to the unselected word-lines.

The page buffer circuit 430 may be coupled to the memory cell array 420 through the plurality of bit-lines BLs. The page buffer circuit 430 may include a plurality of page buffers. In some implementations, one page buffer may be connected to one bit-line. In some implementations, one page buffer may be connected to two or more bit-lines.

The page buffer circuit 430 may temporarily store data to be programmed in a selected page or data read out from the selected page.

The data I/O circuit 440 may be coupled to the page buffer circuit 430 through data lines DLs. During the program operation, the data input/output circuit 440 may receive the data DTA from the storage controller 300 provide the data DTA to the page buffer circuit 430 based on the column address C_ADDR received from the control circuit 460.

During the read operation, the data I/O circuit 440 may provide the data DTA, which is stored in the page buffer circuit 430, to the storage controller 300 based on the column address C_ADDR received from the control circuit 460.

The control circuit 460 may control the page buffer circuit 430 and data I/O circuit 440.

The control circuit 460 may include a status signal generator 465 and the status signal generator 465 may generate the status signal RnB indicating whether each of the program operation, the erase operation and the read operation is completed or and/or is in progress.

The storage controller 300 may determine idle state or busy state of each of the nonvolatile memory devices 400a-400p based on the status signal RnB.

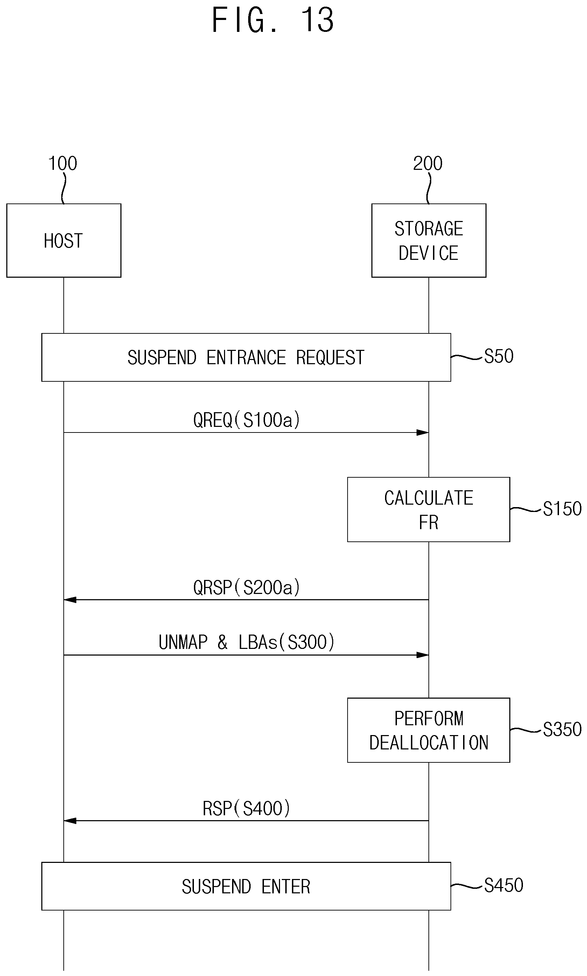

FIG. 13 is a diagram illustrating an example sequence of a method of operating a storage system.

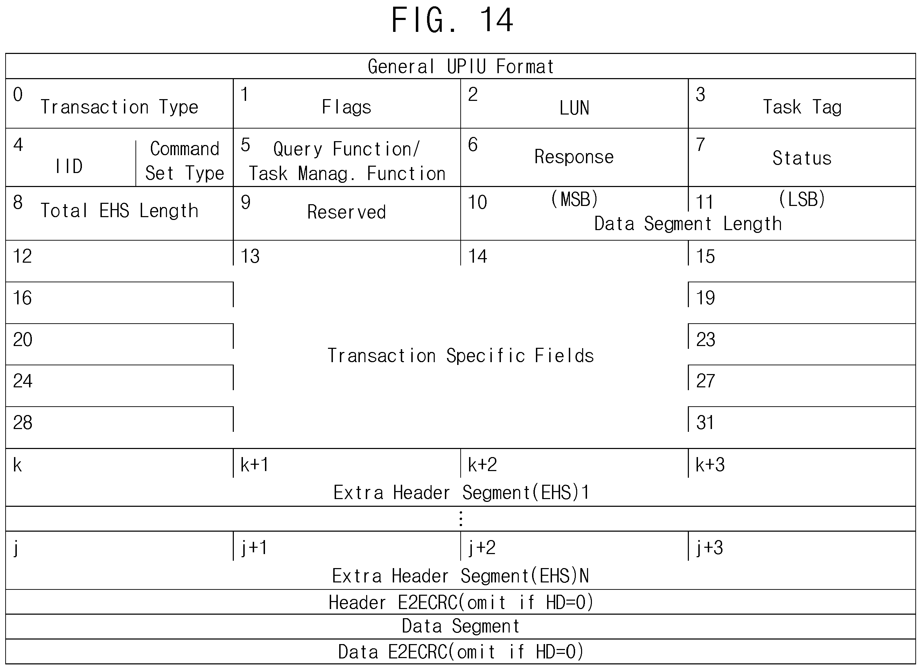

FIG. 13 illustrates a query request UPIU QREQ, a query response UPIU QRSP and a response UPIU RSP transferred between the host 100 and the storage device 200 during a runtime interval of the storage device 200. The UPIU according to the UFS standards will be described below with reference to FIG. 14 and so on.

Referring to FIG. 13, the host 100 transmits a suspend entrance request to the storage device 200 (operation S50), and the host 100 transmits a query request QREQ including a UFS attribute associated with the device-filled-ratio of the storage space to the storage device 200 (operation S100a).

The storage controller 300 in the storage device 200 calculates a filled ratio FR of the nonvolatile memory devices 400a-400p based on valid page counts of the nonvolatile memory devices 400a-400p (operation S150), and transmits a query response QRSP including the calculated filled ratio FR to the host 100 (operation S200a).

The host 100 transmits an unmap command UNMAP and target logical block addresses LBAs to the storage device 200 based on the calculated filled ratio (operation S300). The storage device 200 deallocates physical block addresses corresponding to the target logical block addresses LBAs in response to the unmap command UNMAP (operation S400) and transmits a response RSP including a result of the deallocation to the host 100.

Hereinafter, examples are described based on the system 50 in which the host 100 and the storage device 200 communicate with each other according to UFS standards.

FIG. 14 is a diagram illustrating an example of a UFS protocol information unit (UPIU) used in a method of operating a storage system.

FIG. 14 illustrates a general format of the UPIU according to UFS standards. The UPIU includes a plurality of fields, and byte numbers 1-j+3 and names of the plurality of fields are illustrated in FIG. 14. For example, the UPIU may include the fields such as Transaction Type, Flags, LUN, Task Tag, IID, Command Set Type, Query Function/Task Manag. Funtion, Response, Total EHS Length, Device Information, Data Segment Length, Transaction Specific Fields, Extra Header Segment (EHS)1-Extra Header Segment (EHS)N, Header E2ECRC, Data Segment, Data E2ECRC, and so on. The descriptions may be replaced with the descriptions in the published UFS standards.

The query request associated with device-filled-ratio of the data storage space may be transmitted from the host 100 to the storage device 200 and the query response including information on the device-filled-ratio of the data storage space may be transmitted from the storage device 200 to the host 100, using the UPIU as illustrated in FIG. 14 according to the UFS standards.

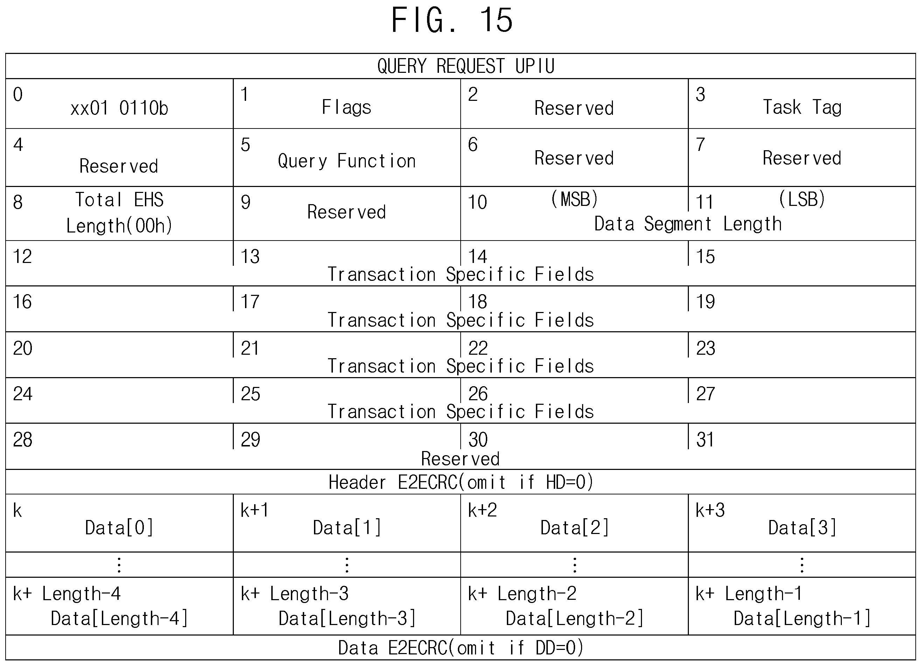

FIG. 15 illustrates an example of a format of the query request UPIU QREQ that is transferred from the host to the storage device.

Referring to FIG. 15, the UPIU in FIG. 15 corresponds to query request UPIU when Transaction Type is 'xx1001101b', and the query request UPIU may include the fields such as Flags, LUN, Task Tag, Query Function, Total EHS Length, (00h), Data Segment Length, Transaction Specific Fields, Header E2ECRC, Data Segment, Data E2ECRC, Reserved, and so on. The descriptions may be replaced with the descriptions in the published UFS standards.

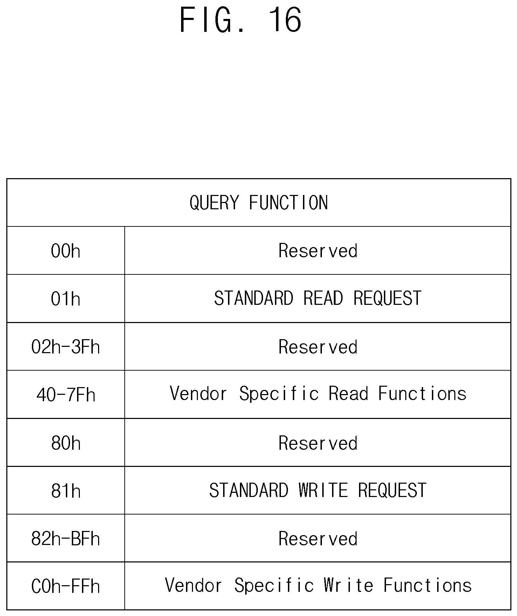

FIG. 16 illustrates an example of query functions of the query request UPIU of FIG. 15.

Referring to FIG. 16, query functions of the query request UPIU may have values such as 00h, 01h, 02h-3Fh, 40-7Fh, 80h, 81h, 82h-BFh and C0h-FFh, the values such as 00h, 02h-3Fh, 80h and 82h-BFh are reserved values, 01h represents a standard read request, 40-7Fh represent vendor specific read functions, 81h represents a standard write request and C0h-FFh represent vendor specific write functions.

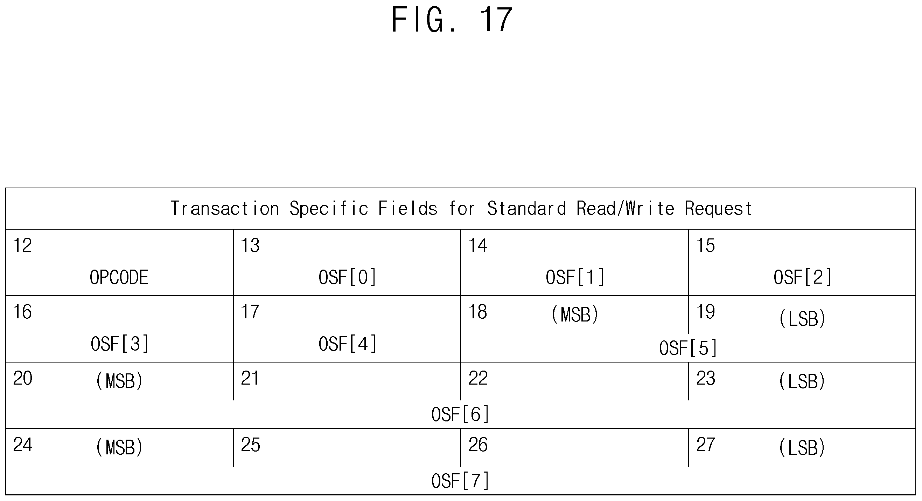

FIG. 17 illustrates an example of transaction specific fields when the query request UPIU of FIG. 15 correspond to standard read/write request.

Referring to FIG. 17, when the query request UPIU of FIG. 15 corresponds to a standard read/write request, transaction specific fields may include fields such as operation code OPCODE and OSF[0]-OSF[7]. The descriptions on the operation code OPCODE and OSF[0]-OSF[7] may be replaced with the descriptions in the published UFS standards.

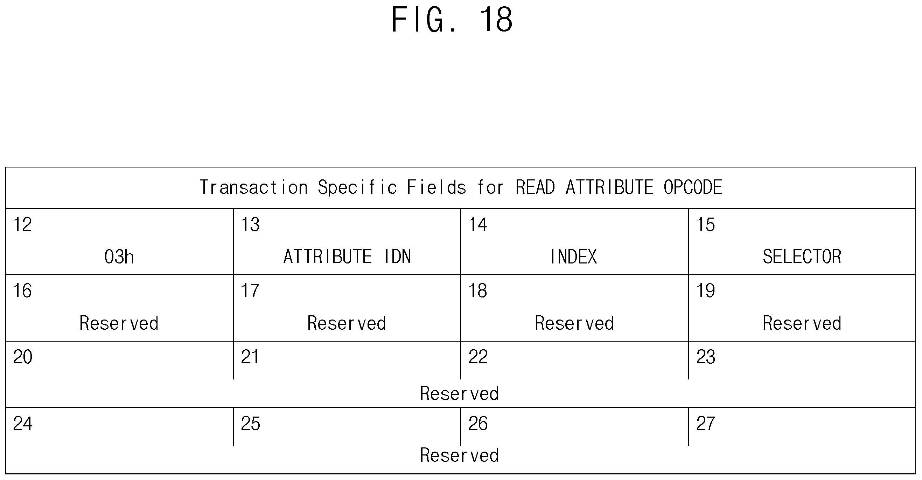

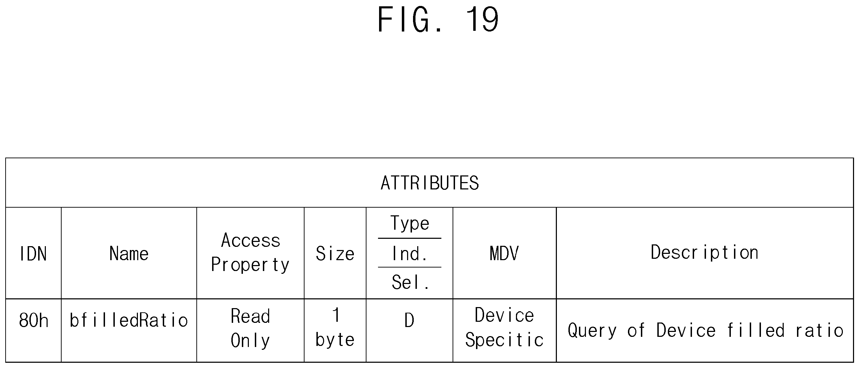

FIG. 18 illustrates an example of read attribute operation code in FIG. 17 and FIG. 19 illustrates an example of UFS attribute of a read request.

Referring to FIG. 18, when the operation code OPCODE corresponds to '03h', the operation code OPCODE represents a read attribute OPCODE, the read attribute OPCODE may include attribute identification number ATTRIBUTE IDN, INDEX, SELECTOR and reserved fields.

UFS attributes associated the device-filled-ratio of the data storage space may be defiled reserved identification number IDN in the UFS standards. For example, as illustrated in FIG. 19, identification number IDN of '80h' may define an attribute of the device-filled-ratio of the data storage space 'bfilledratio'. The attribute of the device-filled-ratio of the data storage space 'bfilledratio' may have a size of a byte and may be only read from the storage device 200 to the host 100 as denoted by 'read only'.

In FIG. 19, MDV represents a manufacturer default value, 'D' type represents a device level flag, 'Ind.' represents amount of valid values of index field, and 'Sel.' represents amount of valid values of selector field.

The attribute of the device-filled-ratio of the data storage space 'bfilledratio' may be included in the Transaction Specific Fields of the query request UPIU of FIG. 15 according to the UFS standards and may be transmitted from the host 100 to the storage device 200.

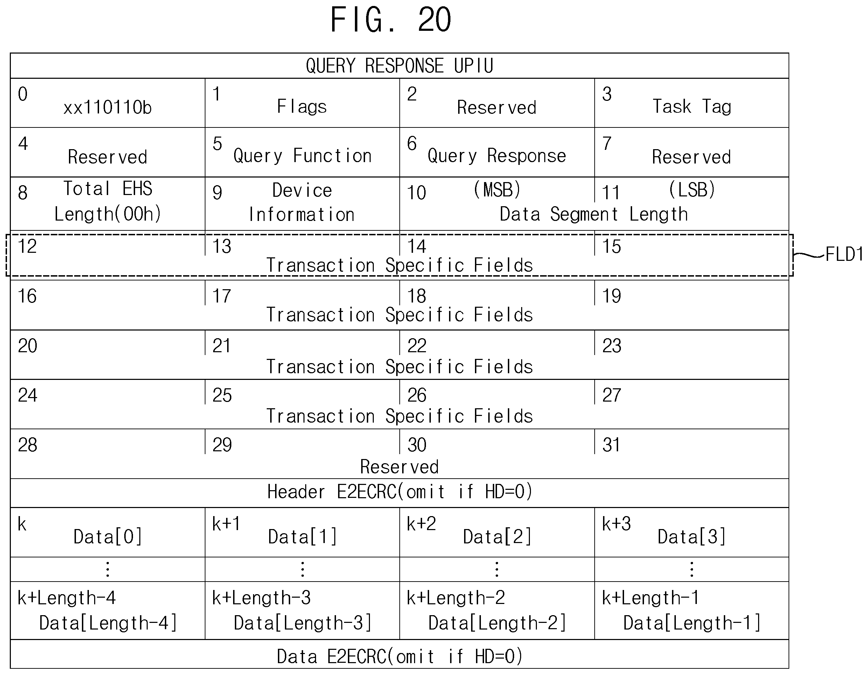

FIG. 20 illustrates an example of a format of a query response UPIU that is transferred from the storage device to the host.

Referring to FIG. 20, the query response UPIU may include a plurality of fields, and numbers and names for each field may be denoted. For example, the plurality of fields may include "xx110110b", "Flags", "Reserved", "Task Tag", "Query Function", "Query Response", "Total EHS Length (00h)", "Device Information", "Data Segment Length", "Transaction Specific Fields", "Header E2ECRC (omit if HD=0)", "Data[0]", "Data[1]", "Data[2]", "Data[3]", ..., "Data[Length-4]", "Data[Length-3]", "Data[Length-2]", "Data[Length-1]", "Data E2ECRC (omit if HD=0)", etc.

A UFS attribute of the read response may be defined using a field FLD1 in FIG. 20.

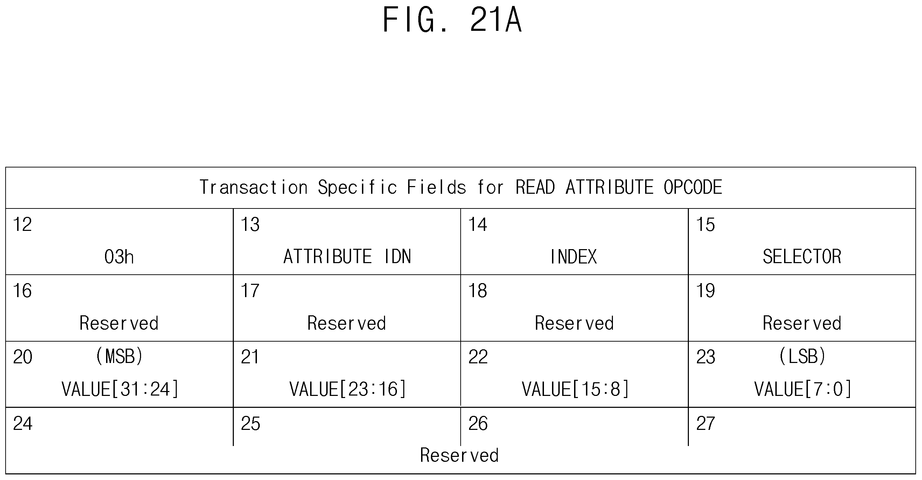

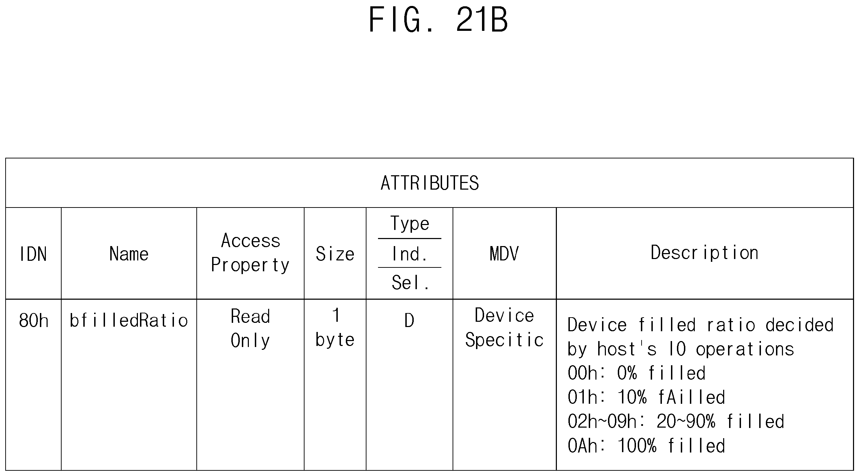

FIG. 21A illustrates an example of read attribute operation code when the query response UPIU of FIG. 20 correspond to standard read request and FIG. 21B illustrates an example of UFS attribute of a read response.

Referring to FIG. 21A, when the operation code OPCODE corresponds to '03h', the operation code OPCODE represents a read attribute OPCODE.

UFS attributes associated the calculated device-filled-ratio of the data storage space may be defiled reserved identification number IDN in the UFS standards. For example, as illustrated in FIG. 21B, identification number IDN of '80h' may define a calculated attribute of the device-filled-ratio of the data storage space 'bfilledratio'. For example, '00h' may represent 0% of the device-filled-ratio, '01h' may represent 10% of the device-filled-ratio, '02h-09h' may represent 20%-90% of the device-filled-ratio, respectively, and '0Ah' may represent 100% of the device-filled-ratio.

The attribute of the device-filled-ratio of the data storage space 'bfilledratio' may have a size of a byte and may be only read from the storage device 200 to the host 100 as denoted by 'read only'.

The attribute of the device-filled-ratio of the data storage space 'bfilledratio' may be included in the Transaction Specific Fields of the query response UPIU of FIG. 20 according to the UFS standards and may be transmitted from the storage device 200 to the host 100.

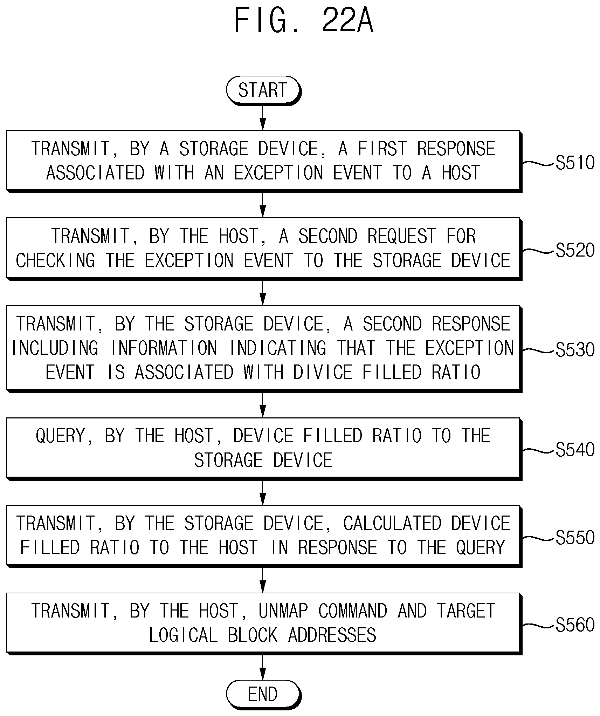

FIG. 22A is a flowchart illustrating an example of a method of operating a storage system.

A method of operating a storage system of FIG. 22A will be described with further reference to the storage system 50 of FIG. 2.

Referring to FIGS. 2 and 22A, the storage device 200 transmits a first response notifying that an exception event has occurred in the storage device 200 to the host 100 in response to a first request from the host 100 (operation S510). The host 100 transmits a second request for checking the exception event that occurred in the storage device 200 to the storage device 200 (operation S520). The storage device 200 transmits a second response including information indicating that the exception event is associated with a device-filled-ratio of a data storage space of the plurality of nonvolatile memory devices 400a-400p in the storage device 200, to the host 100 in response to the second request (operation S530).

The host 100 queries to the storage device 200, the device-filled-ratio the plurality of nonvolatile memory devices 400a-400k in the storage device 200 (operation S540). The storage controller 300, which controls the plurality of nonvolatile memory devices 400a-400k and is included in the storage device 200, transmits calculated device-filled-ratio to the host 100 in response to the query (operation S550).

The host 100 transmits an unmap command and target logical block addresses to the storage device 200 based on the calculated device-filled-ratio (operation S560). The storage device 200 deallocates physical block addresses corresponding to the target logical block addresses in response to the unmap command (operation S570) and transmits a response including a result of the deallocation to the host 100. For example, the host 100 can be configured to transmit the unmap command and the target logical block address to the storage device 200 when a difference between the actual device-filled-ratio 11, e.g., the calculated device-filled-ratio, and the device-filled-ratio 12 recognized by the host 100, e.g., the device-filled-ratio recognized by a file system, of the storage device 200 exceeds a threshold, e.g., is greater than a reference value.

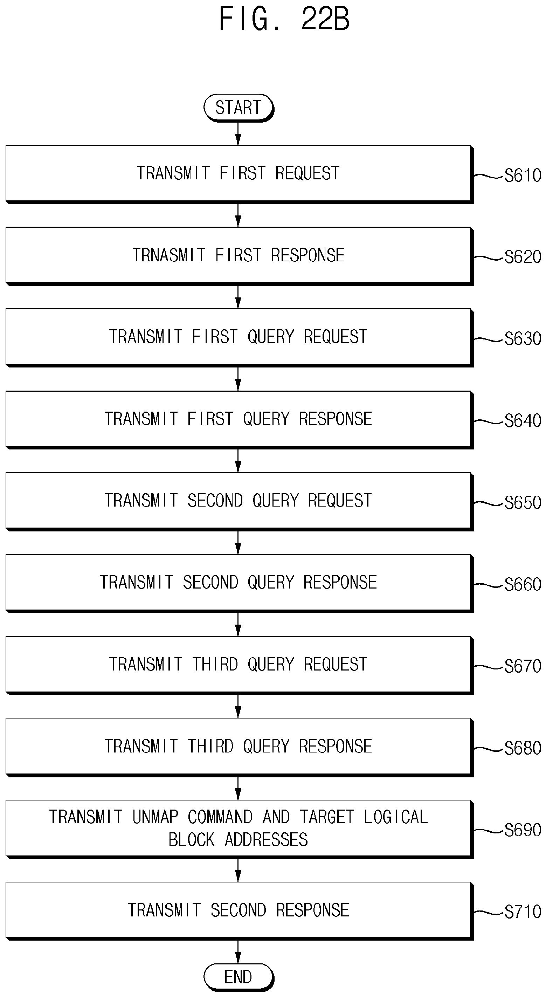

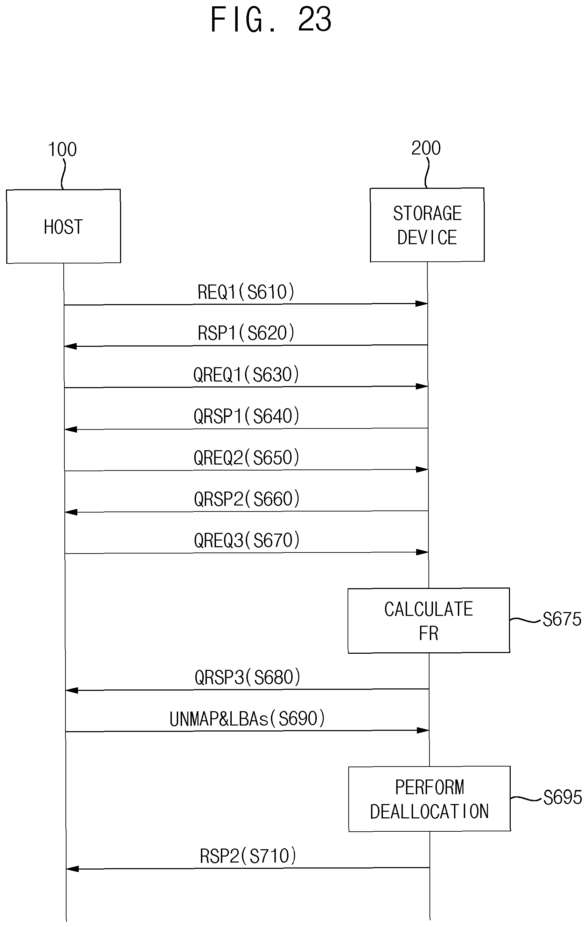

FIG. 22B is a flowchart illustrating a method of operating a storage system, and FIG. 23 is an example of a sequence of a method of operating a storage system of FIG. 22B.

A method of operating a storage system of FIG. 22B and a sequence of FIG. 23 will be described with further reference to the storage system 50 of FIG. 2.

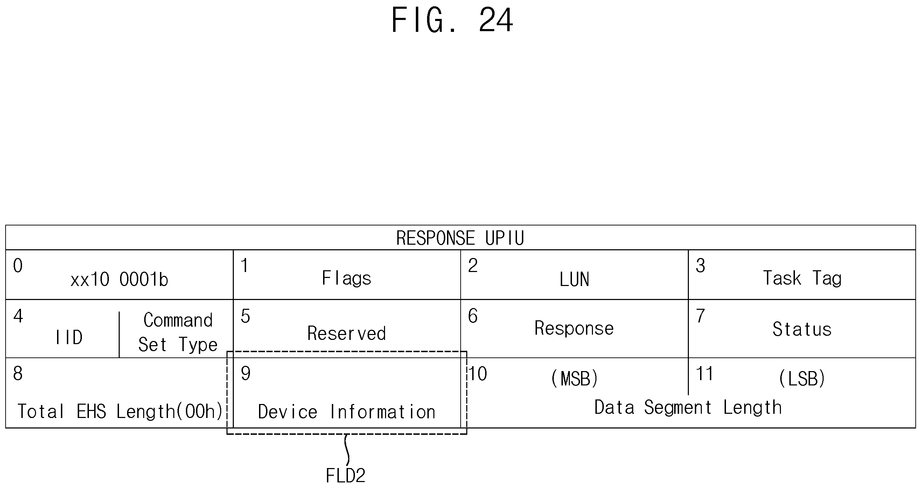

FIG. 23 illustrates a request REQ1, responses RSP1 and RSP2, query request UPIUs QREQ1, QREQ2 and QREQ3 and query response UPIUs QRSP1, QRSP2 and QRSP3 transferred between the host 100 and the storage device 200 during a runtime interval of the storage device 200. The UPIU according to the UFS standards will be described below with reference to FIG. 24 and so on.

Referring to FIGS. 22B and 23, the host 100 transmits a first request REQ1 to the storage device 200 (operation S610). The storage device 200 transmits a first response RSP1 notifying that an exception event has occurred in the storage device 200 to the host 100 in response to the first request REQ1 (operation S620). The host 100 transmits a first query request QREQ1 for checking the exception event that occurred in the storage device 200 to the storage device 200 (operation S630). The storage device 200 transmits a first query response QRSP1 including information indicating that the exception event is associated with a device-filled-ratio of a data storage space of the plurality of nonvolatile memory devices 400a-400p in the storage device 200, to the host in response to the first query request QREQ1 (operation S640).

The host 100 transmits a second query request QREQ2 for disabling the exception event that occurred in the storage device 200 to the storage device 200 (operation S650). The storage device 200 transmits a second query response QRSP2 notifying that the exception event has been disabled to the host 100 in response to the second query request QREQ2 (operation S660).

The host 100 transmits a third query request QREQ3 including a query on the device-filled-ratio the plurality of nonvolatile memory devices 400a-400k in the storage device 200 (operation S670).

The storage controller 300 that controls the plurality of nonvolatile memory devices 400a-400k in the storage device 200, calculates a filled ratio FR of the nonvolatile memory devices 400a-400p based on valid page counts of the nonvolatile memory devices 400a-400p (operation S675), and transmits a third query response QRSP3 including an attribute of the calculated filled ratio FR to the host 100 (operation S680).

The host 100 transmits an unmap command UNMAP and target logical block addresses LBAs to the storage device 200 based on the calculated filled ratio (operation S690). The storage device 200 deallocates physical block addresses corresponding to the target logical block addresses LBAs in response to the unmap command UNMAP (operation S395) and transmits a second response RSP2 including a result of the deallocation to the host 100 (operation S710).

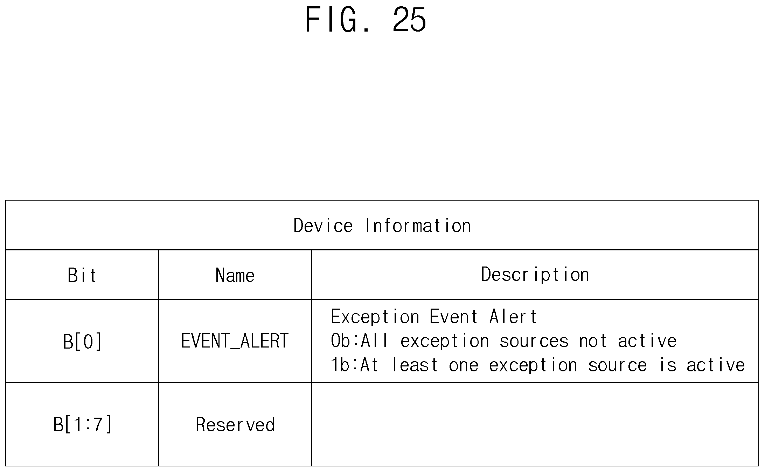

FIG. 24 illustrates an example of a header of response UPIU transmitted from the storage device to the host and FIG. 25 illustrates an example of a format of device information field in the response UPIU of FIG. 24.

Referring to FIGS. 24 and 25, a first bit B[0] in a device information field FLD2 is an except event alert bit by which the storage device 200 notifies the host 100 that an exception event has occurred in the storage device 200 and the first bit B[0] is already used. When the first bit B[0] in the device information field FLD2 is '1', the host 100 transmits a UPIU for checking the exception event that occurred in the storage device 200 to the host 100.

Second through eighth bits B[1:7] in the device information field FLD2 are reserved bits.

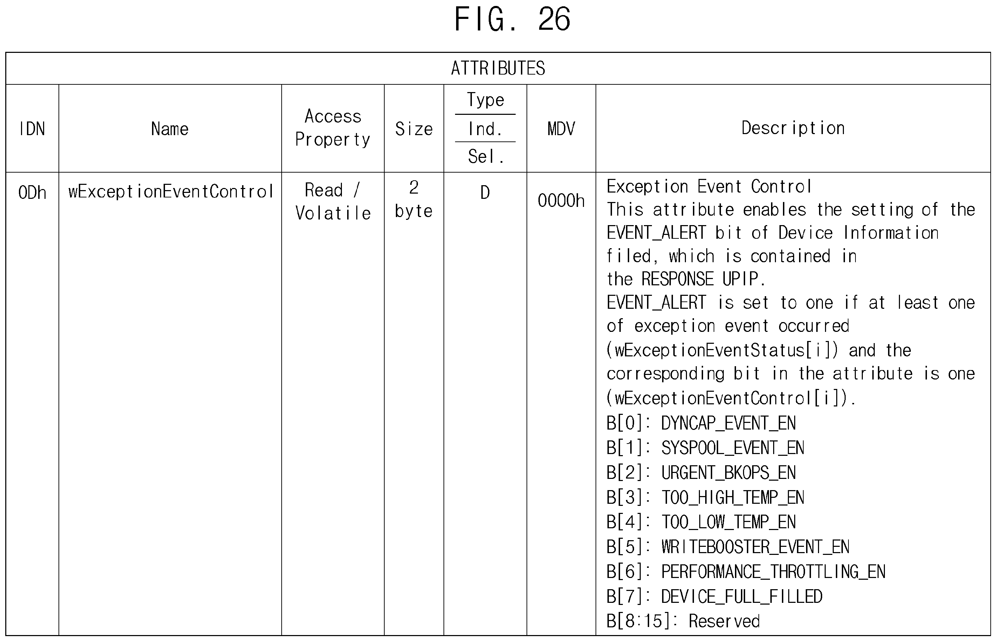

FIG. 26 illustrates an example of exception event control attribute included in the first query response transmitted from the storage device to the host.

Referring to FIG. 26, an exception event control attribute wExceptionEventControl according to the UFS standards may have an identification number IDN of '0Dh', may have a size of 2 bytes, may be read from the storage device 200 to the host 100 and may be volatile.

The exception event control attribute wExceptionEventControl may include bits B[0], B[1], B[2], B[3], B[4], B[5], and B[6] and each of the bits B[0], B[1], B[2], B[3], B[4], B[5], and B[6] may indicate whether each of a plurality of events DYNCAP_EVENT_EN, SYSPOOL_EVENT_EN, URGENT_BKOPS_EN, TOO_HIGH_TEMP_EN, TOO_LOW_TEMP_EN, WRITEBOOSTER_EVENT_EN, and PERFORMANCE_THROTTLING_EN is enabled. The exception event control attribute wExceptionEventControl may further include bits B[7]-B[15] that are reserved in the UFS standards. The storage controller 300 may notify the nonvolatile memory device 400a that the exception event is associated with the device-filled-ratio indicated that the device is fully filled, e.g., DEVICE_FULL_FILLED, in the storage space by using one (for example B[7]) of the reserved bits B[7]-B[15] of the exception event control attribute wExceptionEventControl of the query response UPIU.

The descriptions on the plurality of events DYNCAP_EVENT_EN, SYSPOOL _EVENT_EN, URGENT_BKOPS_EN, TOO_HIGH_TEMP_EN, TOO_LOW_TEMP_EN, WRITEBOOSTER_EVENT_EN, and PERFORMANCE_THROTTLING_EN may be replaced with the descriptions in the published UFS standards.

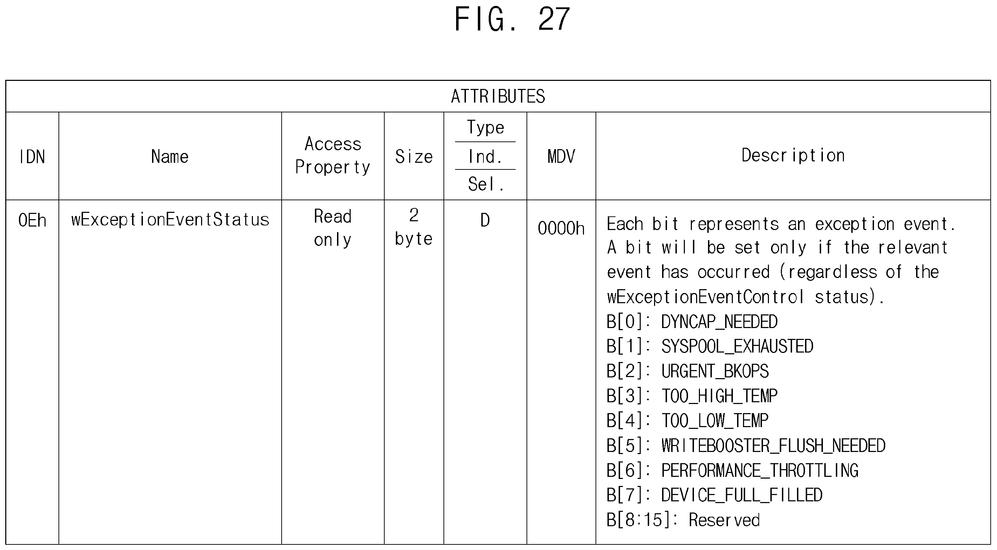

FIG. 27 illustrates an example of exception event status attribute included in the first query response transmitted from the storage device to the host.

Referring to FIG. 27, an exception event status attribute wExceptionEventStatus according to the UFS standards may have an identification number IDN of '0Eh', may have a size of 2 bytes, may be read from the storage device 200 to the host 100 and may be volatile.

The exception event status attribute wExceptionEventStatus may include bits B[0], B[1], B[2], B[3], B[4], B[5], and B[6] and each of the bits B[0], B[1], B[2], B[3], B[4], B[5], and B[6] may indicate whether each of a plurality of events DYNCAP_NEEDED, SYSPOOL_EXHAUSTED, URGENT_BKOPS, TOO_HIGH_TEMP, TOO_LOW_TEMP, WRITEBOOSTER_FLUSH_NEEDED, or PERFORMANCE_THROTTLING has occurred. The exception event status attribute wExceptionEventStatus may further include bits B[7]-B[15] that are reserved in the UFS standards. The storage controller 300 may notifying that the exception event is associated with the device-filled-ratio DEVICE_FULL_FILLED of the storage space by using one (for example B[7]) of the reserved bits B[7]-B[15] of the exception event status attribute wExceptionEventStatus of the query response UPIU.

The descriptions on the plurality of events DYNCAP _NEEDED, SYSPOOL_EXHAUSTED, URGENT_BKOPS, TOO_HIGH_TEMP, TOO_LOW_TEMP, WRITEBOOSTER_FLUSH_NEEDED, and PERFORMANCE_THROTTLING may be replaced with the descriptions in the published UFS standards.

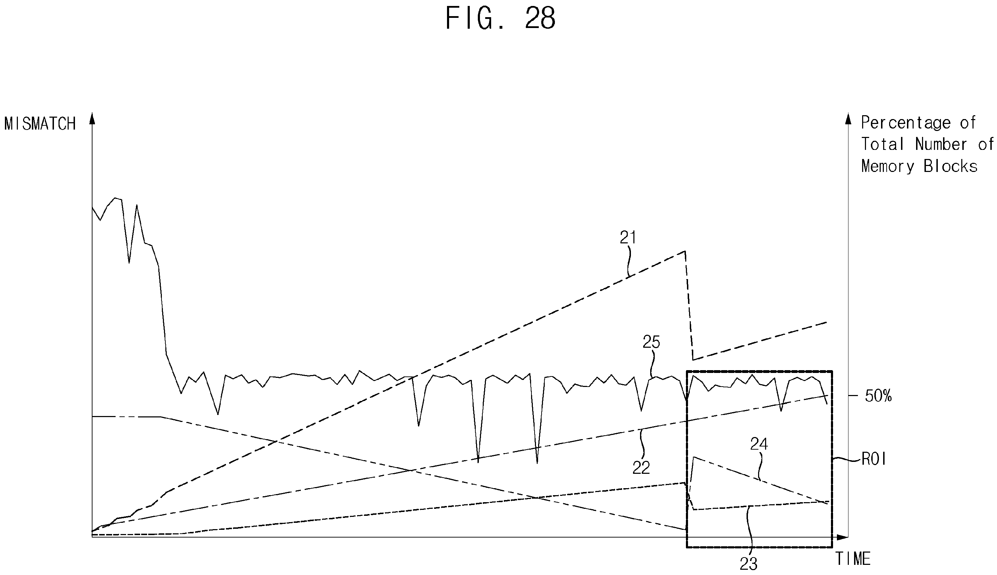

FIG. 28 illustrates a performance of the storage system when the storage system in FIG. 3 performs the method of operating a storage system.

In FIG. 28, a dotted line represents a device-filled-ratio 21 indicating a ratio of valid memory blocks storing valid data among memory blocks of the plurality of nonvolatile memory devices 400a-400p of the storage device 200, another dotted line represents a device-filled-ratio 22 of the plurality of nonvolatile memory devices 400a-400p recognized by the host 100. The slopes of the dotted lines representing the device-filled-ratios 11 and 12 are equal to the value of the ratios. Another dotted line represents dirty segments 23 that are invalid in the host 100 but are valid in the storage device 200, another dotted line represents free blocks 24 in which data is not stored in the storage device 200, and a solid line represents a performance 25 of the storage system 50.

Referring to FIG. 28, the performance 25 of the storage system may be degraded when a difference between the device-filled-ratio 22 recognized by the host 100 and actual device-filled-ratio 21 of the storage device 200 increases. The decreased performance 25 of the storage system may be from being degraded because the host queries a device-filled-ratio to the storage device 200 and transmits unmap command and target logical block addresses to the storage device 200 to secure free blocks based on the calculated device-filled-ratio. Alternatively, the storage device 200 can alter the host of the device-filled-ratio to secure free blocks such that a difference between the device-filled-ratio 22 recognized by the host 100 and actual device-filled-ratio 21 of the storage device 200 is reduced. As free blocks increase, the dirty segments decrease and the performance is maintained in a region ROI.

The method of FIG. 1A, the method of FIG. 1B, the method of FIG. 22A, and the method of FIG. 2B may be performed by the storage system 50 of FIG. 2.

Therefore, the storage controller 300 in the storage device 200 transmits a first response notifying that an exception event has occurred in the storage device 200 to the host 100 in response to a first request from the host 100, transmits a second response including information indicating that the exception event is associated with a device-filled-ratio of a data storage space of the plurality of nonvolatile memory devices 400a-400p in the storage device 200, to the host 100 in response to a second request for checking the exception event, calculates a device-filled-ratio of the nonvolatile memory devices 400a-400k in response to a query associated with the device-filled-ratio, transmits the calculated device-filled-ratio to the host 100, and deallocates physical block addresses corresponding to target logical block addresses in response to the unmap command and the target logical block addresses from the host 100 and secures free blocks.

Therefore, in the storage system 50, the host 100 may issue discards by checking the device-filled-ratio of the data storage space of the storage device 200 or may issue discards by checking the device-filled-ratio in response to an exception event alert bit form the storage device 200 to secure free blocks. Therefore, the storage system 50 may prevent an increased cost of the garbage collection and may prevent degradation of the performance by preventing urgent garbage collection.

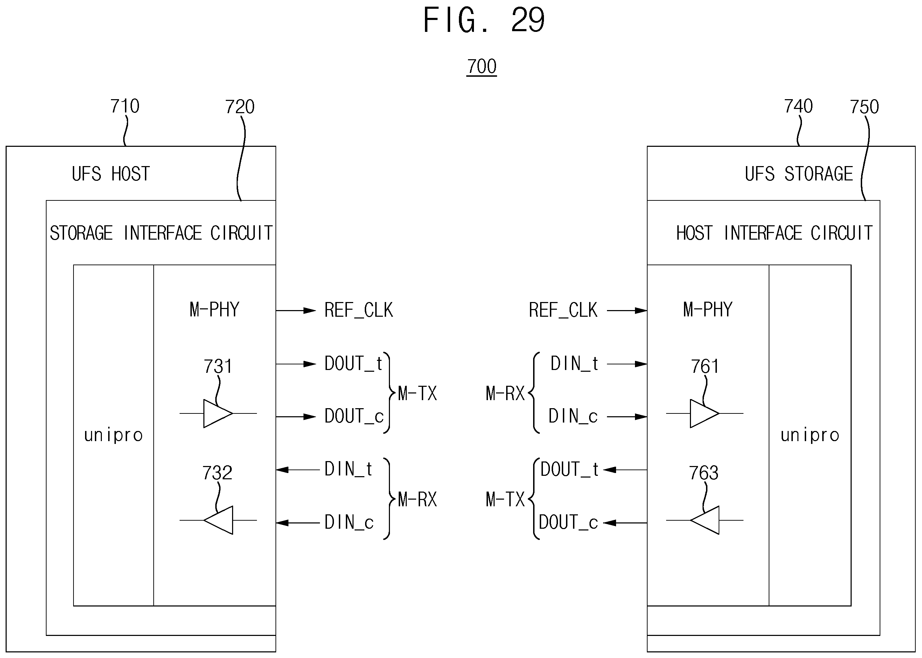

FIG. 29 is a block diagram illustrating an example of a storage system.

Referring to FIG. 29, a storage system 700 includes a UFS host 710 and a UFS storage device 740.

The UFS host 710 may include a storage interface circuit 720 and the UFS storage device 740 may include a host interface circuit 750.

In FIG. 29, the storage interface circuit 720 and the host interface circuit 750 may be referred to as a first interface circuit and a second interface circuit, respectively, and may include a physical layer M-PHY and a UniPro corresponding to interface protocols suggested by Mobile Industry Processor Interface (MIPI) Alliance. The physical layer M-PHY of the first interface circuit 720 may include a pair of lines of transferring a differential input signal pair DIN_t and DIN_c, a pair of lines of transferring a differential output signal pair DOUT_t and DOUT_c and a line of transferring a reference clock signal REF_CLK. The physical layer M-PHY of the first interface circuit 720 may include a transmitter 731 and a receiver 732.

The physical layer M-PHY of the first interface circuit 720 may transfer signals to the second interface circuit 750 through the output terminals DOUT_t and DOUT_c. The output terminals DOUT_t and DOUT_c may be connected to the transmitter 731 and may constitute a transmit channel M-TX of the first interface circuit 720. For example, the signals that are transferred through the output terminals DOUT_t and DOUT_c may be a pair of differential signals. That is, a signal that is transferred through the output terminal DOUT_c may be complementary to a signal that is transferred through the output terminal DOUT_t.

The physical layer M-PHY of the first interface circuit 720 may receive signals from the second interface circuit 750 through the input terminals DIN_t and DIN_c. The input terminals DIN_t and DIN_c may be connected to the receiver 732 and may constitute a receive channel M-RX of the first interface circuit 720. For example, the signals that are received through the input terminals DIN_t and DIN_c may be a pair of differential signals. That is, a signal that is received through the input terminal DIN_c may be complementary to a signal that is received through the input terminal DIN_t.

The output terminals DOUT_t and DOUT_c and the input terminals DIN_t and DIN_c may be controlled to be one of various states in compliance with a given protocol. For example, each of the output terminals DOUT_t and DOUT_c and the input terminals DIN_t and DIN_c may be controlled to be a positive state, a negative state, a ground state, or a floating state.

When a level (e.g., a voltage level) of an output signal of the first output terminal DOUT_t is higher than a level of an output signal of the second output terminal DOUT_c, the output terminals DOUT_t and DOUT_c may be at the positive state. When the level of the output signal of the first output terminal DOUT_t is lower than the level of the output signal of the second output terminal DOUT_c, the output terminals DOUT_t and DOUT_c may be at the negative state. When the first output terminal DOUT_t and the second output terminal DOUT_c are floated, the output terminals DOUT_t and DOUT_c may be at the floating state DIF-Q. When the levels of the first output terminal DOUT_t and the second output terminal DOUT_c are equal, the output terminals DOUT_t and DOUT_c may be at the ground state.

When a level of an input signal of the first input terminal DIN_t is higher than a level of an input signal of the second input terminal DIN_c, the input terminals DIN_t and DIN_c may be at the positive state. When the level of the input signal of the first input terminal DIN_t is lower than the level of the input signal of the second input terminal DIN_c, the input terminals DIN_t, and DIN_c may be at the negative state. When the first input terminal DIN_t and the second input terminal DIN_c are connected with terminals of a ground state, the input terminals DIN_t and DIN_c may be at the ground state. When the first input terminal DIN_t and the second input terminal DIN_c are floated, the input terminals DIN_t and DIN_c may be at the floating state.

The second interface circuit 750 may include input terminals DIN_t and DIN_c, output terminals DOUT_t and DOUT_c, and a clock terminal REF_CLK.

The output terminals DOUT_t and DOUT_c of the second interface circuit 750 may correspond to the input terminals DIN_t and DIN_c of the first interface circuit 140a, and the input terminals DIN_t and DIN_c of the second interface circuit 750 may correspond to the output terminals DOUT_t and DOUT_c of the first interface circuit 720.

A physical layer M-PHY of the second interface circuit 750 may receive signals through the input terminals DIN_t and DIN_c and may transfer signals through the output terminals DOUT_t and DOUT_c. The physical layer M-PHY of the second interface circuit 750 may include a receiver 761 and a transmitter 763.

As in the above description given with reference to the first interface circuit 720, the output terminals DOUT_t and DOUT_c and the input terminals DIN_t and DIN_c of the second interface circuit 750 may be controlled to the positive state, the negative state, the ground state, or the floating state.

Meanwhile, according to the MIPI M-PHY specification, the physical layer M-PHY of the second interface circuit may be a reference clock detector (not illustrated). The reference clock detector may detect a change between the idle mode and the active mode of the UFS storage device 740.

When the UFS storage device 740 does not execute any operation, the UFS storage device 740 may be in a first idle mode or a second idle mode. When UFS storage device 740 is in the first idle mode or the second idle mode, the first interface circuit 720 may not transfer the reference clock REF_CLK to the second interface circuit 750. When the UFS storage device 740 switches from the first idle mode and/or the second idle mode to the active mode, the input terminals DIN_t and DIN_c of the second interface circuit 750 may switch from the floating state to the negative state. When the UFS storage device 740 switches from the first idle mode and/or the second idle mode to the active mode, the first interface circuit 720 may resume a transfer of the reference clock REF_CLK to the second interface circuit 750.

In some implementations, when the UFS storage device 740 is in the second idle mode, the reference clock detector may generate a trigger signal for allowing the UFS storage device 740 to enter the active mode, based on toggling of the reference clock REF_CLK.

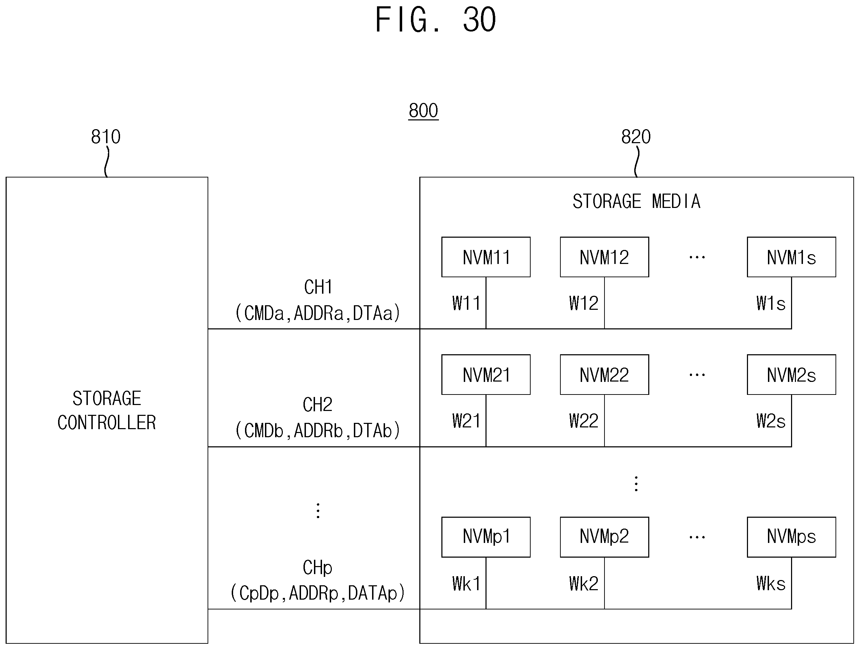

FIG. 30 is a block diagram illustrating an example a storage device.

Referring to FIG. 30, a storage device 800 includes a storage controller 810 and a storage media 820. The storage device 800 may support a plurality of channels CH1, CH2, ..., CHp (hereinafter CH1 to CHp), and the storage media 820 may be connected to the storage controller 810 through the plurality of channels CH1 to CHp.

The storage media 820 may include a plurality of nonvolatile memory devices NVM11, NVM12, ..., NVM1s, NVM21, NVM22, ..., NVM2s, NVMp1, NVMp2, ..., NVMps. For example, the nonvolatile memory devices NVM11 to NVMkp may correspond to the nonvolatile memory devices 400a-400k in FIG. 1. Each of the nonvolatile memory devices NVM11 to NVMps may be connected to one of the plurality of channels CH1 to CHp through a way corresponding thereto. For instance, the nonvolatile memory devices NVM11 to NVM1s may be connected to the first channel CH1 through ways W11, W12, ..., W1s, the nonvolatile memory devices NVM21 to NVM2s may be connected to the second channel CH2 through ways W21, W22, ..., W2s, and the nonvolatile memory devices NVMp1 to NVMps may be connected to the k-th channel CHk through ways Wp1, Wp2, ..., Wps. In some implementations, each of the nonvolatile memory devices NVM11 to NVMps may be implemented as an arbitrary memory unit that may operate according to an individual command from the storage controller 810. For example, each of the nonvolatile memory devices NVM11 to NVMps may be implemented as a chip or a die, but examples are not limited thereto.

The storage controller 810 may transmit and receive signals to and from the storage media 820 through the plurality of channels CH1 to CHp. For example, the storage controller 810 may correspond to the storage controller 300 in FIG. 1. For example, the storage controller 810 may transmit commands CMDa, CMDb, ..., CMDp, addresses ADDRa, ADDRb, ..., ADDRp and data DTAa, DTAb, ..., DTAp to the storage media 820 through the channels CH1 to CHp or may receive the DTAa to DTAp from the storage media 820.

The storage controller 810 may select one of the nonvolatile memories NVM11 to NVMsp, which is connected to each of the channels CH1 to CHp, by using a corresponding one of the channels CH1 to CHp, and may transmit and receive signals to and from the selected nonvolatile memory device.

The storage controller 810 may transmit and receive signals to and from the storage media 820 in parallel through different channels.

The storage controller 810 may communicate with an external host according to the UFS standards. A query request may be transmitted from the host to the storage controller 810, and a query response may be transmitted from the storage controller 810 to the host using a UPIU according to the UFS standards.

The query request may correspond to a query request UPIU according to the UFS standards and the host may set a query function of the query request UPIU to a standard read request and may define the UFS attribute associated with the device-filled-ratio of the storage space by using reserved identification numbers of the query request UPIU.

The query response may correspond to a query response UPIU and the storage controller 810 may transmit the calculated device-filled-ratio to the host by using reserved identification numbers of the query response UPIU.

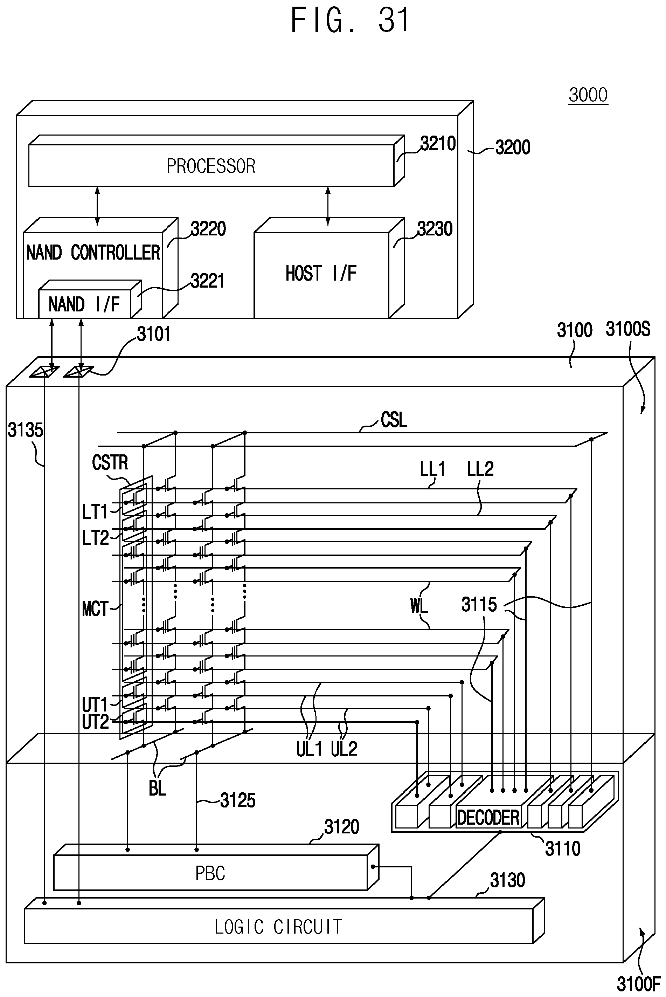

FIG. 31 is a block diagram illustrating an example of an electronic system including a semiconductor device.

Referring to FIG. 31, an electronic system 3000 includes a semiconductor device 3100 and a controller 3200 electrically connected to the semiconductor device 3100. The electronic system 3000 may be a storage device including one or a plurality of semiconductor devices 3100 or an electronic device including a storage device. For example, the electronic system 3000 may be a solid state drive (SSD) device, a universal serial bus (USB), a computing system, a medical device, or a communication device that may include one or a plurality of semiconductor devices 3100.

The semiconductor device 3100 may be a non-volatile memory device, for example, a nonvolatile memory device that is explained with reference to FIGS. 9 to 12. The semiconductor device 3100 may include a first structure 3100F and a second structure 3100S on the first structure 3100F. The first structure 3100F may be a peripheral circuit structure including a decoder circuit 3110, a page buffer circuit 3120, and a logic circuit 3130. The second structure 3100S may be a memory cell structure including a bit-line BL, a common source line CSL, word-lines WL, first and second upper gate lines UL1 and UL2, first and second lower gate lines LL1 and LL2, and (memory) cell strings CSTR between the bit line BL and the common source line CSL.

In the second structure 3100S, each of the memory cell strings CSTR may include lower transistors LT1 and LT2 adjacent to the common source line CSL, upper transistors UT1 and UT2 adjacent to the bit-line BL, and a plurality of memory cell transistors MCT between the lower transistors LT1 and LT2 and the upper transistors UT1 and UT2. The number of the lower transistors LT1 and LT2 and the number of the upper transistors UT1 and UT2 may be varied.

In some implementations, the upper transistors UT1 and UT2 may include string selection transistors, and the lower transistors LT1 and LT2 may include ground selection transistors. The lower gate lines LL1 and LL2 may be gate electrodes of the lower transistors LT1 and LT2, respectively. The word lines WL may be gate electrodes of the memory cell transistors MCT, respectively, and the upper gate lines UL1 and UL2 may be gate electrodes of the upper transistors UT1 and UT2, respectively.

In some implementations, the lower transistors LT1 and LT2 may include a lower erase control transistor LT1 and a ground selection transistor LT2 that may connect to each other in series. The upper transistors UT1 and UT2 may include a string selection transistor UT1 and an upper erase control transistor UT2. At least one of the lower erase control transistor LT1 and the upper erase control transistor UT2 may be used in an erase operation for erasing data stored in the memory cell transistors MCT through gate induced drain leakage (GIDL) phenomenon.

The common source line CSL, the first and second lower gate lines LL1 and LL2, the word lines WL, and the first and second upper gate lines UL1 and UL2 may be electrically connected to the decoder circuit 3110 through first connection wirings 1115 extending to the second structure 3110S in the first structure 3100F. The bit-lines BL may be electrically connected to the page buffer circuit 3120 through second connection wirings 3125 extending to the second structure 3100S in the first structure 3100F.

In the first structure 3100F, the decoder circuit 3110 and the page buffer circuit 3120 may perform a control operation for at least one selected memory cell transistor among the plurality of memory cell transistors MCT. The decoder circuit 3110 and the page buffer circuit 3120 may be controlled by the logic circuit 3130. The semiconductor device 3100 may communicate with the controller 3200 through an input/output pad 3101 electrically connected to the logic circuit 3130. The input/output pad 3101 may be electrically connected to the logic circuit 3130 through an input/output connection wiring 3135 extending to the second structure 3100S in the first structure 3100F.

The controller 3200 may include a processor 3210, a NAND controller 3220, and a host interface 3230. The electronic system 3000 may include a plurality of semiconductor devices 3100, and in this case, the controller 3200 may control the plurality of semiconductor devices 3100.

The processor 3210 may control operations of the electronic system 3000 including the controller 3200. The processor 3210 may be operated by firmware and may control the NAND controller 3220 to access the semiconductor device 3100. The NAND controller 3220 may include a NAND interface 3221 for communicating with the semiconductor device 3100. Through the NAND interface 3221, control command for controlling the semiconductor device 3100, data to be written in the memory cell transistors MCT of the semiconductor device 3100, data to be read from the memory cell transistors MCT of the semiconductor device 3100, etc., may be transferred. The host interface 3230 may provide communication between the electronic system 3000 and an outside host. When control command is received from the outside host through the host interface 3230, the processor 3210 may control the semiconductor device 3100 in response to the control command.

The present disclosures may be applied to various electronic devices including a storage device. For example, example implementations may be applied to systems such as a memory card, a solid state drive (SSD), an embedded multimedia card (eMMC), a universal flash storage (UFS), a mobile phone, a smartphone, a personal digital assistant (PDA), a portable multimedia player (PMP), a digital camera, a camcorder, a personal computer (PC), a server computer, a workstation, a laptop computer, a digital TV, a set-top box, a portable game console, a navigation system, a wearable device, an Internet of Things (IoT) device, an Internet of Everything (IoE) device, an e-book, a virtual reality (VR) device, an augmented reality (AR) device, a server system, an automotive driving system, etc.

While this disclosure contains many specific implementation details, these should not be construed as limitations on the scope of what may be claimed. Certain features that are described in this disclosure in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations, one or more features from a combination can in some cases be excised from the combination, and the combination may be directed to a sub-combination or variation of a sub-combination.

The foregoing is illustrative of example embodiments and is not to be construed as limiting thereof. Although a few example embodiments have been described, those skilled in the art will readily appreciate that many modifications are possible in the example embodiments without materially departing from the present disclosure.

## Claims

1. A method of operating a storage system (50) that includes a host (100) and a storage device (200), the method comprising:
querying, by the host (100), the storage device (200) for a device-filled-ratio of a storage space of a plurality of nonvolatile memory devices (400a-p) in the storage device (200);
transmitting, by a storage controller (300) in the storage device (200), a calculated device-filled-ratio to the host (100) in response to the querying, wherein the storage controller (300) is configured to control the plurality of nonvolatile memory devices (400a-p);
transmitting, by the host (100) and to the storage device (200), an unmap command and target logical block addresses based on the calculated device-filled-ratio; and
deallocating, by the storage device (200), physical block addresses corresponding to the target logical block addresses in response to the unmap command,
wherein querying the device-filled-ratio includes:
transmitting, by the host (100), a query request including a universal flash storage, UFS, attribute associated with the device-filled-ratio of the storage space,
wherein transmitting the calculated device-filled-ratio to the host (100) includes transmitting, by the storage controller (300), a query response including the calculated device-filled-ratio to the host (100), and
wherein the storage controller (300) is configured to calculate the device-filled-ratio based on counts of valid pages of the plurality of nonvolatile memory devices (400a-p), and wherein the valid pages store valid data.

2. The method of claim 1, wherein the host (100) and the storage device (200) are configured to communicate with each other according to UFS standards.

3. The method of claim 1, wherein the query request is transmitted from the host (100) to the storage device (200) using UFS protocol information units, UPIUs, according to UFS standards, and the query response is transmitted from the storage device (200) to the host (100), using UPIUs according to the UFS standards.

4. The method of claim 1, wherein the query request corresponds to a query request UPIU according to the UFS standards, and wherein the host (100) is configured to:
set a query function of the query request UPIU to a standard read request; and
define the UFS attribute associated with the device-filled-ratio of the storage space by using reserved identification numbers of the query request UPIU,
wherein the query response corresponds to a query response UPIU, and
wherein the storage controller (300) is configured to transmit the calculated device-filled-ratio the host (100) by using reserved identification numbers of the query response UPIU.

5. The method of claim 1, wherein the host (100) is configured to query the device-filled-ratio to the host (100) after transmitting a suspend entrance command to the host (100), and
wherein the host (100) is configured to transmit the unmap command and the target logical block addresses to the storage device (200) when a difference between the calculated device-filled-ratio and a device-filled-ratio recognized by a file system (192) of the host (100) is greater than a reference value.

6. The method of claim 1, further comprising:
entering, by the host (100), the storage device (200) in a suspend mode when difference between the calculated device-filled-ratio and a device-filled-ratio recognized by a file system (192) of the host (100) is greater than a reference value after deallocating the physical block addresses.

7. The method of claim 1, further comprising:
in response to a first request from the host (100), transmitting, by the storage device (200), a first response notifying the host (100) that an exception event has occurred in the storage device (200);
transmitting, by the host (100) and to the storage device (200), a second request to check that the exception event occurred in the storage device (200); and
in response to the second request, transmitting, by the storage device (200) and to the host (100), a second response including information indicating that the exception event is associated with a device-filled-ratio of a storage space of a plurality of nonvolatile memory devices (400a-p) in the storage device (200),
wherein the host (100) and the storage device (200) are configured to communicate with each other according to universal flash storage, UFS, standards.

8. The method of claim 7, wherein the host (100) and the storage device (200) are configured to communicate with each other according to UFS standards,
wherein the first response corresponds to a response UFS protocol information unit, UPIU, according to the UFS standards,
wherein the storage controller (300) is configured to notify the host (100) that the exception event occurred by setting an exception event alert bit to a first value, and
wherein the exception event alert bit is included in a device information field of the response UPIU.

9. The method of claim 7, wherein the host (100) and the storage device (200) are configured to communicate with each other according to UFS standards,
wherein the second response corresponds to a query response UPIU according to the UFS standards,
wherein the storage controller (300) is configured to notify the host (100) that the exception event is associated with the device-filled-ratio of the storage space by using one of reserved bits of an exception event control attribute of the query response UPIU, and
wherein the storage controller (300) is configured to notify the host (100) that the exception event is associated with the device-filled-ratio of the storage space by:
assigning one bit of the one of reserved bits of the exception event control attribute of the query response UPIU to indicate that the storage device (200) is fully filled; and
setting the one bit to a first value.

10. The method of claim 7, wherein the host (100) and the storage device (200) are configured to communicate with each other according to UFS standards,
wherein the second response corresponds to a query response UFS protocol information unit (UPIU) according to the UFS standards,
wherein the storage controller (300) is configured to notify the host (100) that the exception event is associated with the device-filled-ratio of the storage space by using one of reserved bits of an exception event status attribute of the query response UPIU, and
wherein the storage controller (300) is configured to notify the host (100) that the exception event is associated with the device-filled-ratio of the storage space by:
assigning one bit of the one of reserved bits of the exception event status attribute of the query response UPIU to indicate that the storage device (200) is fully filled; and
setting the one bit to a first value.

11. The method of claim 7, wherein the query request corresponds to a query request UPIU according to the UFS standards, and wherein the host (100) is configured to:
set a query function of the query request UPIU to a standard read request; and
define the UFS attribute associated with the device-filled-ratio of the storage space by using reserved identification numbers of the query request UPIU,
wherein the query response corresponds to a query response UPIU, and
wherein the storage controller (300) is configured to transmit the calculated device-filled-ratio the host (100) by using reserved identification numbers of the query response UPIU.

12. The method of claim 7, further comprising deallocating, by the storage device (200), physical block addresses corresponding to the target logical block addresses in response to the unmap command.

## Patentansprüche

1. Ein Verfahren zum Betreiben eines Speichersystems (50), das einen Host (100) und eine Speichervorrichtung (200) umfasst, wobei das Verfahren umfasst:
Abfragen eines Vorrichtungsauslastungsgrads eines Speicherplatzes einer Mehrzahl von nichtflüchtigen Speichervorrichtungen (400a-p) in der Speichervorrichtung (200) durch den Host (100);
Übertragen eines berechneten Vorrichtungsauslastungsgrads durch einen Speicher-Controller (300) in der Speichervorrichtung (200) an den Host (100) als Reaktion auf die Abfrage, wobei der Speicher-Controller (300) derart konfiguriert ist, dass er die Mehrzahl nichtflüchtiger Speichervorrichtungen (400a-p) steuert;
Übertragen eines Unmap-Befehls und von Ziel-Logikblockadressen auf der Grundlage des berechneten Vorrichtungsauslastungsgrads durch den Host (100) an die Speichervorrichtung (200); und
Freigeben von physikalischen Blockadressen, die den Ziel-Logikblockadressen entsprechen, durch die Speichervorrichtung (200) als Reaktion auf den Unmap-Befehl, wobei das Abfragen des Vorrichtungsauslastungsgrads umfasst:
Übertragen einer Abfrageanforderung durch den Host (100), die ein Universal-Flash-Storage, UFS, -Attribut enthält, das mit dem Vorrichtungsauslastungsgrad des Speicherplatzes assoziiert ist,
wobei das Übertragen des berechneten Vorrichtungsauslastungsgrad an den Host (100) das Übertragen einer Abfrageantwort durch den Speicher-Controller (300) an den Host (100) umfasst, einer Abfrageantwort, welche den berechneten Vorrichtungsauslastungsgrad enthält, an den Host (100), und
wobei der Speicher-Controller (300) derart konfiguriert ist, dass er den Vorrichtungsauslastungsgrad auf der Grundlage der Anzahl gültiger Seiten der Mehrzahl nichtflüchtiger Speichervorrichtungen (400a-p) berechnet, und wobei die gültigen Seiten gültige Daten speichern.

2. Das Verfahren nach Anspruch 1, wobei der Host (100) und die Speichervorrichtung (200) derart konfiguriert sind, dass sie gemäß den UFS-Standards miteinander kommunizieren.

3. Das Verfahren nach Anspruch 1, wobei die Abfrageanforderung vom Host (100) an die Speichervorrichtung (200) unter Verwendung von UFS-Protokoll-Informationseinheiten, UPIUs, gemäß den UFS-Standards übertragen wird und die Abfrageantwort von der Speichervorrichtung (200) an den Host (100) unter Verwendung von UPIUs gemäß den UFS-Standards übertragen wird.

4. Das Verfahren nach Anspruch 1, wobei die Abfrageanforderung einer Abfrageanforderung UPIU gemäß den UFS-Standards entspricht und wobei der Host (100) derart konfiguriert ist, dass er:
eine Abfragefunktion der Abfrageanforderung UPIU auf eine Standard-Leseanforderung setzt; und
das mit dem Vorrichtungsauslastungsgrad des Speicherplatzes verbundene UFS-Attribut unter Verwendung reservierter Identifikationsnummern der Abfrageanforderung UPIU definiert,
wobei die Abfrageantwort einer Abfrageantwort UPIU entspricht, und
wobei der Speicher-Controller (300) derart konfiguriert ist, dass er den berechneten Vorrichtungsauslastungsgrad unter Verwendung reservierter Identifikationsnummern der Abfrageantwort UPIU an den Host (100) überträgt.

5. Das Verfahren nach Anspruch 1, wobei der Host (100) derart konfiguriert ist, dass er nach dem Senden eines Befehls zum Eintritt in den Suspend-Zustand an den Host (100) die Vorrichtungsauslastungsgrad von der Vorrichtung abfragt, und
wobei der Host (100) derart konfiguriert ist, dass er den Unmap-Befehl und die Ziel-Logikblockadressen an die Speichervorrichtung (200) überträgt, wenn eine Differenz zwischen dem berechneten Vorrichtungsauslastungsgrad und einem vom Dateisystem (192) des Hosts (100) erkannten Vorrichtungsauslastungsgrad größer als ein Referenzwert ist.

6. Das Verfahren nach Anspruch 1, ferner umfassend:
das Versetzen der Speichervorrichtung (200) durch den Host (100) in einen Suspend-Modus, wenn die Differenz zwischen dem berechneten Vorrichtungsauslastungsgrad und einem vom Dateisystem (192) des Hosts (100) erkannten Vorrichtungsauslastungsgrad nach der Freigabe der physikalischen Blockadressen größer als ein Referenzwert ist.

7. Das Verfahren nach Anspruch 1, ferner umfassend:
als Reaktion auf eine erste Anfrage vom Host (100) das Senden einer ersten Antwort durch die Speichervorrichtung (200), in der dem Host (100) mitgeteilt wird, dass in der Speichervorrichtung (200) ein Ausnahmereignis aufgetreten ist;
Senden einer zweiten Anfrage durch den Host (100) an die Speichervorrichtung (200), um zu überprüfen, ob das Ausnahmeereignis in der Speichervorrichtung (200) aufgetreten ist; und
als Reaktion auf die zweite Anfrage das Senden einer zweiten Antwort durch die Speichervorrichtung (200) an den Host (100), wobei die zweite Antwort Informationen enthält, die angeben, dass das Ausnahmeereignis mit einem Vorrichtungsauslastungsgrad eines Speicherplatzes einer Mehrzahl von nichtflüchtigen Speichervorrichtungen (400a-p) in der Speichervorrichtung (200) zusammenhängt,
wobei der Host (100) und die Speichervorrichtung (200) derart konfiguriert sind, dass sie gemäß den Universal Flash Storage, UFS, -Standards miteinander kommunizieren.

8. Das Verfahren nach Anspruch 7, wobei der Host (100) und die Speichervorrichtung (200) derart konfiguriert sind, dass sie gemäß den UFS-Standards miteinander kommunizieren,
wobei die erste Antwort einer Antwort-UFS-Protokollinformationseinheit, UPIU, gemäß den UFS-Standards entspricht,
wobei der Speicher-Controller (300) derart konfiguriert ist, dass er den Host (100) über das Auftreten des Ausnahmeereignisses benachrichtigt, indem er ein Ausnahmeereignis-Alarmbit auf einen ersten Wert setzt, und
wobei das Ausnahmeereignis-Alarmbit in einem Vorrichtungsinformationsfeld der Antwort-UPIU enthalten ist.

9. Das Verfahren nach Anspruch 7, wobei der Host (100) und die Speichervorrichtung (200) derart konfiguriert sind, dass sie gemäß den UFS-Standards miteinander kommunizieren,
wobei die zweite Antwort einer Abfrageantwort UPIU gemäß den UFS-Standards entspricht,
wobei der Speicher-Controller (300) derart konfiguriert ist, dass er den Host (100) darüber benachrichtigt, dass das Ausnahmereignis mit dem Vorrichtungsauslastungsgrad des Speicherplatzes zusammenhängt, indem er eines der reservierten Bits eines Ausnahmereignis-Steuerattributs der Abfrageantwort-UPIU verwendet, und
wobei der Speicher-Controller (300) derart konfiguriert ist, dass er den Host (100) darüber benachrichtigt, dass das Ausnahmereignis mit dem Vorrichtungsauslastungsgrad der Speichervorrichtung zusammenhängt, indem er:
ein Bit des einen der reservierten Bits des Ausnahmereignis-Steuerattributs der Abfrageantwort-UPIU zuweist, um anzuzeigen, dass die Speichervorrichtung (200) vollständig belegt ist; und
das eine Bit auf einen ersten Wert setzt.

10. Das Verfahren nach Anspruch 7, wobei der Host (100) und die Speichervorrichtung (200) derart konfiguriert sind, dass sie gemäß den UFS-Standards miteinander kommunizieren,
wobei die zweite Antwort einer Abfrageantwort-UFS-Protokollinformationseinheit (UPIU) gemäß den UFS-Standards entspricht,
wobei der Speicher-Controller (300) derart konfiguriert ist, dass er den Host (100) darüber benachrichtigt, dass das Ausnahmereignis mit dem Vorrichtungsauslastungsgrad des Speicherplatzes zusammenhängt, indem er eines der reservierten Bits eines Ausnahmereignis-Statusattributs der Abfrageantwort-UPIU verwendet, und
wobei der Speicher-Controller (300) derart konfiguriert ist, dass er den Host (100) darüber benachrichtigt, dass das Ausnahmeereignis mit dem Vorrichtungsauslastungsgrad des Speicherplatzes zusammenhängt, indem er:
ein Bit des einen der reservierten Bits des Ausnahmeereignis-Statusattributs der Abfrageantwort-UPIU zuweist, um anzuzeigen, dass die Speichervorrichtung (200) vollständig belegt ist; und
das eine Bit auf einen ersten Wert setzt.

11. Das Verfahren nach Anspruch 7, wobei die Abfrageanforderung einer Abfrageanforderung UPIU gemäß den UFS-Standards entspricht und wobei der Host (100) derart konfiguriert ist, dass er:
eine Abfragefunktion der Abfrageanforderung UPIU auf eine Standard-Leseanforderung setzt; und
das mit dem Vorrichtungsauslastungsgrad des Speicherplatzes verbundene UFS-Attribut unter Verwendung reservierter Identifikationsnummern der Abfrageanforderung UPIU definiert,
wobei die Abfrageantwort einer Abfrageantwort UPIU entspricht, und
wobei der Speicher-Controller (300) derart konfiguriert ist, dass er den berechneten Vorrichtungsauslastungsgrad unter Verwendung reservierter Identifikationsnummern der Abfrageantwort UPIU an den Host (100) überträgt.

12. Das Verfahren nach Anspruch 7, ferner umfassend, dass die Speichervorrichtung (200) als Reaktion auf den Unmap-Befehl physikalische Blockadressen freigibt, die den Ziel-Logikblockadressen entsprechen.

## Revendications

1. Un procédé de fonctionnement d'un système de stockage (50) comprenant un hôte (100) et un dispositif de stockage (200), le procédé comprenant :
interroger, par l'hôte (100), le dispositif de stockage (200) afin d'obtenir un taux de remplissage du dispositif correspondant à un espace de stockage d'une pluralité de dispositifs de mémoire non volatile (400a-p) dans le dispositif de stockage (200) ;
transmettre, par un contrôleur de stockage (300) dans le dispositif de stockage (200), un taux de remplissage du dispositif calculé vers l'hôte (100) en réponse à l'interrogation, le contrôleur de stockage (300) étant configuré pour contrôler la pluralité de dispositifs de mémoire non volatile (400a-p) ;
transmettre, par l'hôte (100) et au dispositif de stockage (200), une commande de démappage et des adresses de blocs logiques cibles basées sur le taux de remplissage du dispositif calculé ; et
désaffecter, par le dispositif de stockage (200), des adresses de blocs physiques correspondant aux adresses de blocs logiques cibles en réponse à la commande de démappage,
dans lequel l'interrogation du taux de remplissage du dispositif comprend :
transmettre, par l'hôte (100), une requête d'interrogation comprenant un attribut de stockage flash universel, UFS, associé au taux de remplissage du dispositif de l'espace de stockage,
dans lequel la transmission du taux de remplissage du dispositif calculé à l'hôte (100) comprend la transmission, par le contrôleur de stockage (300), une réponse à la requête comprenant le taux de remplissage du dispositif calculé vers l'hôte (100), et
dans lequel le contrôleur de stockage (300) est configuré pour calculer le taux de remplissage du dispositif sur la base des nombres de pages valides de la pluralité de dispositifs de mémoire non volatile (400a-p), et dans lequel les pages valides stockent des données valides.

2. Le procédé selon la revendication 1, dans lequel l'hôte (100) et le dispositif de stockage (200) sont configurés pour communiquer entre eux conformément aux normes UFS.

3. Le procédé selon la revendication 1, dans lequel la requête est transmise de l'hôte (100) au dispositif de stockage (200) à l'aide d'unités d'information de protocole UFS, UPIU, conformes aux normes UFS, et la réponse à la requête est transmise du dispositif de stockage (200) à l'hôte (100) à l'aide d'UPIU conformes aux normes UFS.

4. Le procédé selon la revendication 1, dans lequel la requête de consultation correspond à une UPIU de requête de consultation conforme aux normes UFS, et dans lequel l'hôte (100) est configuré pour :
définir une fonction de consultation de l'UPIU de requête de consultation comme une requête de lecture standard ; et
définir l'attribut UFS associé au taux de remplissage du dispositif de l'espace de stockage en utilisant des numéros d'identification réservés de la requête UPIU,
dans lequel la réponse à la requête correspond à une réponse à la requête UPIU, et
dans lequel le contrôleur de stockage (300) est configuré pour transmettre le taux de remplissage du dispositif calculé à l'hôte (100) en utilisant des numéros d'identification réservés de la réponse à la requête UPIU.

5. Le procédé selon la revendication 1, dans lequel l'hôte (100) est configuré pour demander le taux de remplissage du dispositif à l'hôte (100) après avoir transmis une commande d'entrée en suspension à l'hôte (100), et
dans lequel l'hôte (100) est configuré pour transmettre la commande de démappage et les adresses de blocs logiques cibles au dispositif de stockage (200) lorsqu'une différence entre le taux de remplissage du dispositif calculé et un taux de remplissage du dispositif reconnu par un système de fichiers (192) de l'hôte (100) est supérieure à une valeur de référence.

6. Le procédé selon la revendication 1, comprenant en outre :
mettre, par l'hôte (100), du dispositif de stockage (200) en mode de suspension lorsque la différence entre le taux de remplissage du dispositif calculé et un taux de remplissage du dispositif détecté par un système de fichiers (192) de l'hôte (100) est supérieure à une valeur de référence après la désallocation des adresses de blocs physiques.

7. Le procédé selon la revendication 1, comprenant en outre :
en réponse à une première requête provenant de l'hôte (100), transmettre, par le dispositif de stockage (200), une première réponse informant l'hôte (100) qu'un événement d'exception s'est produit dans le dispositif de stockage (200) ;
transmettre, par l'hôte (100) et à destination du dispositif de stockage (200), une deuxième requête visant à vérifier que l'événement d'exception s'est produit dans le dispositif de stockage (200) ; et
en réponse à la deuxième requête, transmettre, par le dispositif de stockage (200) et à l'hôte (100), une deuxième réponse comprenant des informations indiquant que l'événement d'exception est associé à un taux de remplissage du dispositif d'un espace de stockage d'une pluralité de dispositifs de mémoire non volatile (400a-p) dans le dispositif de stockage (200),
dans lequel l'hôte (100) et le dispositif de stockage (200) sont configurés pour communiquer entre eux conformément aux normes Universal Flash Storage, UFS.

8. Le procédé selon la revendication 7, dans lequel l'hôte (100) et le dispositif de stockage (200) sont configurés pour communiquer entre eux conformément aux normes UFS,
dans lequel la première réponse correspond à une unité d'information de protocole de réponse UFS, UPIU, conforme aux normes UFS,
dans lequel le contrôleur de stockage (300) est configuré pour notifier à l'hôte (100) que l'événement d'exception s'est produit en définissant un bit d'alerte d'événement d'exception sur une première valeur, et
dans lequel le bit d'alerte d'événement d'exception est inclus dans un champ d'informations sur le dispositif de l'UPIU de réponse.

9. Le procédé selon la revendication 7, dans lequel l'hôte (100) et le dispositif de stockage (200) sont configurés pour communiquer entre eux conformément aux normes UFS,
dans lequel la deuxième réponse correspond à une réponse de requête UPIU conforme aux normes UFS,
dans lequel le contrôleur de stockage (300) est configuré pour notifier à l'hôte (100) que l'événement d'exception est associé au taux de remplissage du dispositif de l'espace de stockage en utilisant l'un des bits réservés d'un attribut de contrôle d'événement d'exception de la réponse de requête UPIU, et
dans lequel le contrôleur de stockage (300) est configuré pour notifier à l'hôte (100) que l'événement d'exception est associé au taux de remplissage du dispositif de l'espace de stockage du dispositif en :
attribuant un bit parmi les bits réservés de l'attribut de contrôle d'événement d'exception de la réponse de requête UPIU pour indiquer que le dispositif de stockage (200) est entièrement rempli ; et
définissant ledit bit sur une première valeur.

10. Le procédé selon la revendication 7, dans lequel l'hôte (100) et le dispositif de stockage (200) sont configurés pour communiquer entre eux conformément aux normes UFS,
dans lequel la deuxième réponse correspond à une unité d'information de protocole UFS (UPIU) de réponse à une requête, conformément aux normes UFS,
dans lequel le contrôleur de stockage (300) est configuré pour notifier à l'hôte (100) que l'événement d'exception est associé au taux de remplissage du dispositif de l'espace de stockage par le dispositif en utilisant l'un des bits réservés d'un attribut d'état d'événement d'exception de l'UPIU de réponse à la requête, et
dans lequel le contrôleur de stockage (300) est configuré pour notifier à l'hôte (100) que l'événement d'exception est associé au taux de remplissage du dispositif de l'espace de stockage en :
attribuant un bit parmi les bits réservés de l'attribut d'état d'événement d'exception de l'UPIU de réponse à la requête pour indiquer que le dispositif de stockage (200) est entièrement rempli ; et
définissant ledit bit sur une première valeur.

11. Le procédé selon la revendication 7, dans lequel la requête de consultation correspond à une UPIU de requête de consultation conforme aux normes UFS, et dans lequel l'hôte (100) est configuré pour :
définir une fonction de consultation de l'UPIU de requête de consultation comme une requête de lecture standard ; et
définir l'attribut UFS associé au taux de remplissage du dispositif de l'espace de stockage en utilisant des numéros d'identification réservés de la requête UPIU,
dans lequel la réponse à la requête correspond à une réponse à la requête UPIU, et
dans lequel le contrôleur de stockage (300) est configuré pour transmettre le taux de remplissage du dispositif calculé à l'hôte (100) en utilisant des numéros d'identification réservés de la réponse à la requête UPIU.

12. Le procédé selon la revendication 7, comprenant en outre la désallocation, par le dispositif de stockage (200), des adresses de blocs physiques correspondant aux adresses de blocs logiques cibles en réponse à la commande de démappage.
